# EUROPÄISCHE PATENTSCHRIFT

(11) **EP 1 209 973 B1**
(45) Veröffentlichungstag und Bekanntmachung des Hinweises auf die Patenterteilung: **25.02.2004**
(21) Anmeldenummer: 00962443.8
(22) Anmeldetag: 05.09.2000
(51) Int. Cl.: A01N 43/90, A01N 47/18, A01N 47/06

(54) **HERBIZIDES MITTEL**
HERBICIDE AGENT
HERBICIDE

(30) Priorität: 07.09.1999 CH 164099
(43) Veröffentlichungstag der Anmeldung: 05.06.2002
(73) Patentinhaber: Syngenta Participations AG, 4058 Basel (CH)
(72) Erfinder: GLOCK, Jutta, CH-4322 Mumpf (CH); FRIEDMANN, Adrian, Alberto, Caversham Reading RG4 5AD (GB); CORNES, Derek, CH-4123 Allschwil (CH)
(74) Vertreter: Bastian, Werner Maria
(86) Internationale Anmeldenummer: PCT/EP2000/008659
(87) Internationale Veröffentlichungsnummer: WO 2001/017352

(56) Entgegenhaltungen:
- WO-A-00/47585
- WO-A-96/11574
- WO-A-96/21652
- WO-A-98/13361
- WO-A-99/47525
- US-A- 4 834 908

## Beschreibung

Die vorliegende Erfindung betrifft neue selektiv-herbizide Mittel zur Bekämpfung von Gräsern und Unkräutern in Kulturen von Nutzpflanzen, insbesondere in Kulturen von Mais und Getreide, weiche ein 3-Hydroxy-4-(4-methylphenyl)-5-oxo-pyrazolin-Herbizid, einen Safener (Gegenmittel, Antidot) und ein Öladditiv enthalten und welche die Nutzpflanzen, nicht aber die Unkräuter vor der phytotoxischen Wirkung des Herbizides bewahren, sowie die Verwendung dieser Mittel zur Unkrautbekämpfung in Nutzpflanzenkulturen.

Beim Einsatz von Herbiziden können z.B. in Abhängigkeit von der Dosis des Herbizids und der Applikationsart, der Kulturpflanze, der Bodenbeschaffenheit und den klimatischen Bedingungen, wie Belichtungsdauer, Temperatur und Niederschlagsmengen auch die Kulturpflanzen in erheblichem Maße geschädigt werden. Um diesem und ähnlichen Problemen zu begegnen, sind schon verschiedene Stoffe als Safener vorgeschlagen worden, welche befähigt sind, die schädigende Wirkung des Herbizids auf die Kulturpflanze zu antagonisieren, das heißt, die Kulturpflanze davor zu schützen, wobei aber die Herbizidwirkung auf die zu bekämpfenden Unkräuter praktisch nicht beeinträchtigt wird.

Dabei hat es sich gezeigt, daß die vorgeschlagenen Safener sowohl bezüglich der Kulturpflanzen als auch bezüglich des Herbizids und teilweise auch in Abhängigkeit von der Applikationsart oft sehr spezifisch wirken. Dies bedeutet, daß ein bestimmter Safener sich oft nur für eine bestimmte Kulturpflanze und eine spezielle Herbizidstoffklasse oder ein bestimmtes Herbizid eignet. Beispielsweise wurde gefunden, daß die aus EP-A-0 191 736 (Verb. 1.316) und WO 91/07874 (Beispiel 3) sowie aus The Pesticide Manual, 11ed., British Crop Protection Council, Entry Nr. 154 und 462 bekannten Safener Cloquintocet bzw. Cloquintocet-mexyl und Mefenpyr bzw. Mefenpyr-diethyl zwar die Kulturpflanze vor der phytotoxischen Wirkung von speziellen 3-Hydroxy-4-(4-methylphenyl)-5-oxo-pyrazolin-Derivaten schützen können, jedoch die herbizide Wirkung auf Unkräuter teilweise abschwächen.

Aus US-A-4,834,908 ist bekannt, daß gewisse Öladditiv-Kombinationen die herbizide Aktivität von Verbindungen aus der Klasse der Cyclohexandione, Benzothiadiazinondioxide, Diphenyletherherbizide und Aryloxyphenoxyherbizide erhöhen können.

Obwohl die 3-Hydroxy-4-(4-methylphenyl)-5-oxo-pyrazolin-Derivate strukturell völlig verschieden von den in der US-A-4,834,908 offenbaren Verbindungen sind, führt die Kombination derartiger Öladditive mit diesen 3-Hydroxy-4-(4-methylphenyl)-5-oxo-pyrazolin-Derivaten ebenfalls zu einer Steigerung der herbiziden Aktivität, jedoch wird auch die Kulturpflanze in erheblichem Maße geschädigt. Daher ist diese Herbizid/Öladditiv-Mischung für die selektive Bekämpfung von Unkräutern in Nutzpflanzenkulturen nicht geeignet.

Es wurde nun überraschenderweise gefunden, daß man mit diesen speziellen 3-Hydroxy-4-(4-methylphenyl)-5-oxo-pyrazolin-Herbiziden Unkräuter sehr erfolgreich selektiv bekämpfen kann ohne die Kulturpflanze zu schädigen, indem man diese Verbindungen in Kombination mit einem Additiv, welches ein Öl pflanzlichen oder tierischen Ursprungs oder ein Mineralöl, deren Alkylester, oder Mischungen dieser Öle und Ölderivate enthält und den Safenem Cloquintocet oder Mefenpyr appliziert.

Gegenstand der vorliegenden Erfindung ist daher ein selektiv-herbizides Mittel, welches dadurch gekennzeichnet ist, daß es neben inerten Formulierungshilfsmitteln wie Lösungsmittel oder feste Trägerstoffe als wirkstoff eine Mischung aus
a) einer herblzid-wirksamen Menge einer Verbindung der Formel I 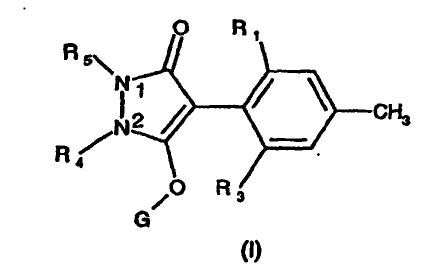 worin
   R₁ und R₃ unabhängig voneinander Halogen, Nitro, Cyano, C₁-C₄-Alkyl, C₂-C₄-Alkenyl, C₂-C₄-Alkinyl, C₁-C₄-Halogenalkyl, C₂-C₆-Halogenalkenyl, C₃-C₆-Cycloalkyl, durch Halogen substituiertes C₃-C₆-Cycloalkyl, C₂-C₆-Alkoxyalkyl, C₂-C₆-Alkylthioalkyl, Hydroxy, Mercapto, C₁-C₆-Alkoxy, C₃-C₆-Alkenyloxy, C₃-C₆-Alkinyloxy, Carbonyl, Carboxyl, C₁-C₄-Alkylcarbonyl, C₁-C₄-Hydroxyalkyl, C₁-C₄-Alkoxycarbonyl, C₁-C₄-Alkylthio, C₁-C₄-Alkylsulfinyl, C₁-C₄-Alkylsulfonyl, Amino, C₁-C₄-Alkylamino oder Di-(C₁-C₄-alkyl)-amino bedeuten;
   R₄ und R₅ zusammen eine Gruppe

   -C-R₆(R₇)-O-C-R₈(R₉)-C-R₁₀(R₁₁)-C-R₁₂(R₁₃)- (Z₁),

   -C-R₁₄(R₁₅)-C-R₁₆(R₁₇)-O-C-R₁₈(R₁₉)-C-R₂₀(R₂₁)- (Z₂),

   oder

   -C-R₂₂(R₂₃)-C-R₂₄(R₂₅)-C-R₂₆(R₂₇)-O-C-R₂₈(R₂₉)-; (Z₃)

   bedeuten;
   worin R₆, R₇, R₈, R₉, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆, R₂₇, R₂₈ und R₂₉ unabhängig voneinander für Wasserstoff, Halogen, C₁-C₄-Alkyl oder C₁-C₄-Halogenalkyl stehen, wobei an die Kohlenstoffatome der Gruppen Z₁, Z₂ oder Z₃ ein Alkylenring, welcher zusammen mit den Kohlenstoffatomen der Gruppen Z₁, Z₂ oder Z₃ 2 bis 6 Kohlenstoffatome enthält und durch Sauerstoff unterbrochen sein kann, entweder anelliert oder spiroverknüpft sein kann, oder dieser Alkylenring mindestens ein Ringatom der Gruppen Z₁, Z₂ oder Z₃ überbrückt;
   G Wasserstoff, -C(X₁)-R₃₀, -C(X₂)-X₃-R₃₁, -C(X₄)-N(R₃₂)-R₃₃, -SO₂-R₃₄, ein Alkali-, Erdalkali-, Sulfonium- oder Ammoniumkation oder -P(X₅)(R₃₅)-R₃₆ oder -CH₂-X₆-R₃₇ bedeutet;
   X₁, X₂, X₃, X₄, X₅ und X₆ unabhängig voneinander Sauerstoff oder Schwefel bedeuten; R₃₀, R₃₁, R₃₂ und R₃₃ unabhängig voneinander Wasserstoff,
   C₁-C₁₀-Alkyl, C₁-C₁₀-Halogenalkyl, C₁-C₁₀-Cyanoalkyl, C₁-C₁₀-Nitroalkyl, C₁-C₁₀-Aminoalkyl, C₁-C₅-Alkylamino-C₁-C₅-alkyl, C₂-C₈-Dialkylamino-C₁-C₅-alkyl, C₃-C₇-Cyclalkyl-C₁-C₅-alkyl, C₂-C₁₀-Alkoxy-alkyl, C₄-C₁₀-Alkenyloxy-alkyl, C₄-C₁₀-Alkinyloxy-alkyl, C₂-C₁₀-Alkylthio-alkyl, C₁-C₅-Alkysulfoxyl- C₁-C₅-alkyl, C₁-C₅-Alkylsulfonyl-C₁-C₅-alkyl, C₂-C₈-Alkylideneamino-oxy-C₁-C₅-alkyl, C₁-C₅-Alkylcarbonyl-C₁-C₅-alkyl, C₁-C₅-Alkoxycarbonyl-C₁-C₅-alkyl, C₁-C₅-Aminocarbonyl-C₁-C₅-alkyl, C₂-C₈-Dialkylamino-carbonyl-C₁-C₅-alkyl, C₁-C₅-Alkylcarbonylamino-C₁-C₅-alkyl, C₂-C₅-Alkylcarbonyl-(C₁-C₅-alkyl)-aminoalkyl, C₃-C₆-Trialkylsilyl-C₁-C₅-alkyl, Phenyl-C₁-C₅-alkyl, Heteroaryl- C₁-C₅-alkyl, Phenoxy- C₁-C₅-alkyl, Heteroaryloxy-C₁-C₅-alkyl, C₂-C₅-Alkenyl, C₂-C₅-Halogenalkenyl, C₃-C₈-Cycloalkyl, Phenyl, oder durch C₁-C₃-Alkyl, C₁-C₃-Halogenalkyl, C₁-C₃-Alkoxy, C₁-C₃-Halogenalkoxy, Halogen, Cyano oder Nitro substituiertes Phenyl oder Heteroaryl oder Heteroarylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Heteroarylamino, Diheteroarylamino, durch C₁-C₁₃-Alkyl, C₁-C₃-Halogenalkyl, C₁-C₃-Alkoxy, C₁-C₃-Halogenalkoxy, Halogen, Cyano oder Nitro substituiertes Diheteroarylamino, Phenylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Phenylamino, Diphenylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Diphenylamino, C₃-C₇-Cycloalkylamino, durch C₁-C₃-Alkyl, C₁-C₃-Halogenalkyl, C₁-C₃-Alkoxy, C₁-C₃-Halogenalkoxy, Halogen, Cyano oder Nitrosubstituiertes C₃-C₇-Cycloalkylamino, Di-C₃-C₇-cycloalkylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Di-C₃-C₇cycloalkylamino, C₃-C₇-Cycloalkoxy oder durch C₁-C₃-Alkyl, C₁-C-₃-Halogenalkyl, C₁-C₃-Alkoxy, C₁-C₃-Halogenalkoxy, Halogen, Cyano oder Nitro substituiertes C₃-C₇-Cycloalkoxy bedeuten;
   R₃₄, R₃₅ und R₃₆ Wasserstoff, C₁-C₁₀-Alkyl, C₁-C₁₀-Halogenalkyl, C₁-C₁₀-Cyanoalkyl, C₁-C₁₀-Nitroalkyl, C₁-C₁₀-Aminoalkyl, C₁-C₅-Alkylamino-C₁-C₅-alkyl, C₂-C₈-Dialkylamino-C₁-C₅-alkyl, C₃-C₇-Cyclalkyl-C₁-C₅-alkyl, C₂-C₁₀-Alkoxy-alkyl, C₄-C₁₀-Alkenyloxy-alkyl, C₄-C₁₀-Alkinyloxyalkyl, C₂-C₁₀-Alkylthio-alkyl, C₁-C₅-Alkysulfoxyl-C₁-C₅-alkyl, C₁-C₅-Alkylsulfonyl-C₁-C₅-alkyl, C₂-C₈-Alkylideneamino-oxy-C₁-C₅-alkyl, C₁-C₅-Alkylcarbonyl-C₁-C₅-alkyl, C₁-C₅-Alkoxycarbonyl-C₁-C₅-alkyl, C₁-C₅-Amino-carbonyl-C₁-C₅-alkyl, C₂-C₈-Dialkylamino-carbonyl-C₁-C₅-alkyl, C₁-C₅-Alkylcarbonylamino-C₁-C₅-alkyl, C₂-C₅-Alkylcarbonyl-(C₁-C₅-alkyl)-aminoalkyl, C₃-C₆-Trialkylsilyl-C₁-C₅-alkyl, Phenyl- C₁-C₅-alkyl, Heteroaryl-C₁-C₅-alkyl, Phenoxy- C₁-C₅-alkyl, Heteroaryloxy-C₁-C₅-alkyl, C₂-C₅-Alkenyl, C₂-C₅-Halogenalkenyl, C₃-C₈-Cycloalkyl, Phenyl, oder durch C₁-C₃-Alkyl, C₁-C₃-Halogenalkyl, C₁-C₃-Alkoxy, C₁-C₃-Halogenalkoxy, Halogen, Cyano oder Nitro substituiertes Phenyl oder Heteroaryl oder Heteroarylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Heteroarylamino, Diheteroarylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Diheteroarylamino, Phenylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Phenylamino, Diphenylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Diphenylamino, C₃-C₇-Cycloalkylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes C₃-C₇-Cycloalkylamino, Di-C₃-C₇-cycloalkylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Di-C₃-C₇cycloalkylamino, C₃-C₇-Cycloalkoxy, durch C₁-C₃-Alkyl, C₁-C₃-Halogenalkyl, C₁-C₃-Alkoxy, C₁-C₃-Halogenalkoxy, Halogen, Cyano oder Nitro substituiertes C₃-C₇-Cycloalkoxy, C₁-C₁₀-Alkoxy, C₁-C₁₀-Halogenalkoxy, C₁-C₅-Alkylamino, C₂-C₈-Dialkylamino sowie Benzyloxy oder Phenoxy, wobei die Benzyl- und Phenylgruppen ihrerseits durch C₁-C₃-Alkyl, C₁-C₃-Halogenalkyl, C₁-C₃-Alkoxy, C₁-C₃-Halogenalkoxy, Halogen, Cyano, Formyl, Acetyl, Propionyl, Carboxyl, C₁-C₅-Alkoxycarbonyl, Methylthio, Ethylthio, oder Nitro substituiert sein können, bedeuten;
   und
   R₃₇ C₁-C₁₀-Alkyl, C₁-C₁₀-Halogenalkyl, C₁-C₁₀-Cyanoalkyl, C₁-C₁₀-Nitroalkyl, C₁-C₁₀-Aminoalkyl, C₁-C₅-Alkylamino-C₁-C₅-alkyl, C₂-C₈-Dialkylamino-C₁-C₅-alkyl, C₃-C₇-Cyclalkyl-C₁-C₅-alkyl, C₂-C₁₀-Alkoxy-alkyl, C₄-C₁₀-Alkenyloxy-alkyl, C₄-C₁₀-Alkinyloxy-alkyl, C₂-C₁₀-Alkylthio-alkyl, C₁-C₅-Alkysulfoxyl-C₁-C₅-alkyl, C₁-C₅-Alkylsulfonyl-C₁-C₅-alkyl, C₂-C₈-Alkylideneamino-oxy-C₁-C₅-alkyl, C₁-C₅-Alkylcarbonyl-C₁-C₅-alkyl, C₁-C₅-Alkoxycarbonyl-C₁-C₅-alkyl, C₁-C₅-Amino-carbonyl-C₁-C₅-alkyl, C₂-C₈-Dialkylamino-carbonyl-C₁-C₅-alkyl, C₁-C₅-Alkylcarbonylamino-C₁-C₅-alkyl, C₂-C₅-Alkylcarbonyl-(C₁-C₅-alkyl)-aminoalkyl, C₃-C₆-Trialkylsilyl-C₁-C₅-alkyl, Phenyl-C₁-C₅-alkyl, Heteroaryl-C₁-C₅-alkyl, Phenoxy-C₁-C₅-alkyl, Heteroaryloxy- C₁-C₅-alkyl, C₂-C₅-Alkenyl, C₂-C₅-Halogenalkenyl, C₃-C₈-Cycloalkyl, Phenyl, oder durch C₁-C₃-Alkyl, C₁-C₃-Halogenalkyl, C₁-C₃-Alkoxy, C₁-C₃-Halogenalkoxy, Halogen, Cyano oder Nitro substituiertes Phenyl oder Heteroaryl, oder Heteroarylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Heteroarylamino, Diheteroarylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Diheteroarylamino, Phenylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Phenylamino, Diphenylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Diphenylamino, C₃-C₇-Cycloalkylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes C₃-C₇-Cycloalkylamino, Di-C₃-C₇-cycloalkylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Di-C₃-C₇cycloalkylamino, C₃-C₇-Cycloalkoxy, durch C₁-C₃-Alkyl, C₁-C₃-Halogenalkyl, C₁-C₃-Alkoxy, C₁-C₃-Halogenalkoxy, Halogen, Cyano oder Nitro substituiertes C₃-C₇-Cycloalkoxy oder C₁-C₁₀-Alkylcarbonyl bedeutet; sowie Salze und Diastereomere der Verbindungen der Formel I, mit der Maßgabe, daß R₁ und R₃ nicht gleichzeitig für Methyl stehen;
b) einer herbizid-antagonistisch wirksamen Menge eines Safeners ausgewählt aus Cloquintocet, einem Alkali-, Erdalkali-, Sulfonium- oder Ammoniumkation des Cloquintocets, Cloquintocet-mexyl, Mefenpyr, einem Alkali-, Erdalkali-, Sulfonium- oder Ammoniumkation des Mefenpyrs und Mefenpyr-diethyl; und
c) einem Additiv enthaltend einen Methylester einer C₁₂-C₁₈ Tettsaure aufweist.

In den obigen Definitionen ist unter Halogen Fluor, Chlor, Brom und Jod, vorzugsweise Fluor, Chlor und Brom zu verstehen. Die in den Substituentendefinitionen vorkommenden Alkylgruppen stehen beispielsweise für Methyl, Ethyl, n-Propyl, iso-Propyl, n-Butyl, sek.-Butyl, iso-Butyl oder tert.-Butyl, sowie die Isomeren Pentyle und Hexyle. Geeignete Cycloalkylsubstituenten enthalten 3 bis 6 Kohlenstoffatome und sind z.B. Cyclopropyl, Cyclobutyl, Cyclopentyl oder Cyclohexyl. Diese können durch Halogen, vorzugsweise Fluor, Chlor oder Brom, ein- oder mehrfach substituiert sein. Unter Alkenyl ist beispielsweise Vinyl, Allyl, Methallyl, 1-Methylvinyl oder But-2-en-1-yl zu verstehen. Alkinyl bedeutet beispielsweise Ethinyl, Propargyl, But-2-in-1-yl, 2-Methylbutin-2-yl oder But-3-in-2-yl. Halogenalkylgruppen haben vorzugsweise eine Kettenlänge von 1 bis 4 Kohlenstoffatomen. Halogenalkyl ist beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl,Pentafluorethyl, 1.1-Difluor-2,2,2-trichlorethyl, 2,2,3,3-Tetrafluorethyl und 2,2,2-Trichlorethyl; vorzugsweise Trichlormethyl, Difluorchlormethyl, Difluormethyl, Trifluormethyl und Dichlorfluormethyl. Als Halogenalkenyl kommen ein- oder mehrfach durch Halogen substituierte Alkenylgruppen in Betracht, wobei Halogen Fluor, Chlor, Brom und Jod und insbesondere Fluor und Chlor bedeutet, beispielsweise 2,2-Difluor-1-methylvinyl, 3-Fluorpropenyl, 3-Chlorpropenyl, 3-Brompropenyl, 2,3,3-Trifluorpropenyl, 2,3,3-Trichlorpropenyl und 4,4,4-Trifluor-but-2-en-1-yl. Unter den durch Halogen 1-, 2- oder 3-fach substituierten C₂-C₆-Alkenylgruppen sind diejenigen bevorzugt, die eine Kettenlänge von 3 bis 5 Kohlenstoffatomen besitzen. Alkoxygruppen haben vorzugsweise eine Kettenlänge von 1 bis 6 Kohlenstoffatomen. Alkoxy ist beispielsweise Methoxy, Ethoxy, Propoxy, i-Propoxy, n-Butoxy, iso-Butoxy, sek.-Butoxy und tert.-Butoxy sowie die Isomeren Pentyloxy und Hexyloxy; vorzugsweise Methoxy und Ethoxy. Alkylcarbonyl steht vorzugsweise für Acetyl oder Propionyl. Alkoxycarbonyl bedeutet beispielsweise Methoxycarbonyl, Ethoxycarbonyl, Propoxycarbonyl, iso-Propoxycarbonyl, n-Butoxycarbonyl, iso-Butoxycarbonyl, sek.-Butoxycarbonyl oder tert.-Butoxycarbonyl; vorzugsweise Methoxycarbonyl oder Ethoxycarbonyl. Alkylthiogruppen haben vorzugsweise eine Kettenlänge von 1 bis 4 Kohlenstoffatomen. Alkylthio ist beispielsweise Methylthio, Ethylthio, Propylthio, iso-Propylthio, n-Butylthio, iso-Butylthio, sek.-Butylthio oder tert.-Butylthio, vorzugsweise Methylthio und Ethylthio. Alkylsulfinyl ist beispielsweise Methylsulfinyl, Ethylsulfinyl, Propylsulfinyl, iso-Propylsulfinyl, n-Butylsulfinyl, iso-Butylsulfinyl, sek.-Butylsulfinyl, tert.-Butylsulfinyl; vorzugsweise Methylsulfinyl und Ethylsulfinyl. Alkylsulfonyl steht beispielsweise für Methylsulfonyl, Ethylsulfonyl, Propylsulfonyl, iso-Propylsulfonyl, n-Butylsulfonyl, iso-Butylsulfonyl, sek.-Butylsulfonyl oder tert.-Butylsulfonyl; vorzugsweise für Methylsulfonyl oder Ethylsulfonyl. Alkylamino ist beispielsweise Methylamino, Ethylamino, n-Propylamino, iso-Propylamino oder die isomeren Butylamine. Dialkylamino steht beispielsweise für Dimethylamino, Methylethylamino, Diethylamino, n-Propylmethylamino, Di-butylamino und Di-Isopropylamino. Alkoxyalkylgruppen haben vorzugsweise 2 bis 6 Kohlenstoffatome. Alkoxyalkyl bedeutet beispielsweise Methoxymethyl, Methoxyethyl, Ethoxymethyl, Ethoxyethyl, n-Propoxymethyl, n-Propoxyethyl, iso-Propoxymethyl oder iso-Propoxyethyl. Alkylthioalkyl bedeutet beispielsweise Methylthiomethyl, Methylthioethyl, Ethylthiomethyl, Ethylthioethyl, n-Propylthiomethyl, n-Propylthioethyl, iso-Propylthiomethyl, iso-Propylthioethyl, Butylthiomethyl, Butylthioethyl oder Butylthiobutyl. Phenyl, kann substituiert vorliegen. Die Substituenten können dann in ortho-, meta- und/oder para-Stellung stehen. Bevorzugte Substituentenstellungen sind die ortho- und para-Positionen zur Ringverknüpfungsstelle. Heteroarylgruppen sind üblicherweise aromatische Heterocyclen, die vorzugsweise 1 bis 3 Heteroatome ausgewählt aus Stickstoff, Sauerstoff und Schwefel enthalten. Beispiele für geeignete Heterocyclen und Heteroaromaten sind: Pyrrolidin, Piperidin, Pyran, Dioxan, Azetidin, Oxetan, Pyridin, Pyrimidin, Triazin, Thiazol, Thiadiazol, Imidazol, Oxazol, Isoxazol sowie Pyrazin, Furan, Morpholin, Piperazin, Pyrazol, Benzoxazol, Benzthiazol, Chinoxalin und Chinolin. Diese Heterocyclen und Heteroaromaten können weiter substituiert sein, beispielsweise mit Halogen, Alkyl, Alkoxy, Haloalkyl, Haloalkoxy, Nitro, Cyano, Thioalkyl, Alkylamino oder Phenyl. Die C₂-C₁₀-Alkenyl- und Alkinylgruppen R₃₄ können ein- oder mehrfach ungesättigt sein. Sie enthalten vorzugsweise 2 bis 12, insbesondere 2 bis 6 Kohlenstoffatome.

Alkali-, Erdalkali- oder Ammoniumkationen für den Substituenten G sind beispielsweise die Kationen von Natrium, Kalium, Magnesium, Kalzium und Ammonium. Bevorzugte Sulfoniumkationen sind insbesondere Trialkylsulfoniumkationen, worin die Alkylreste vorzugsweise je 1 bis 4 Kohlenstoffatome enthalten.

Die linke freie Valenz der Gruppen Z₁, Z₂ und Z₃ ist an die 1-Position und die rechte freie Valenz ist an die 2-Position des Pyrazolinringes gebunden.

Verbindungen der Formel 1, worin an die Gruppen Z₁, Z₂ und Z₃ ein Alkylenring anelliert oder spiroverknüpft sein kann, welcher zusammen mit den Kohlenstoffatomen der Gruppen Z₁, Z₂ und Z₃ 2 bis 6 Kohlenstoffatome enthält, haben beispielsweise die folgende Struktur:

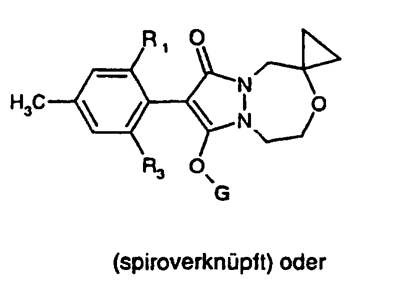

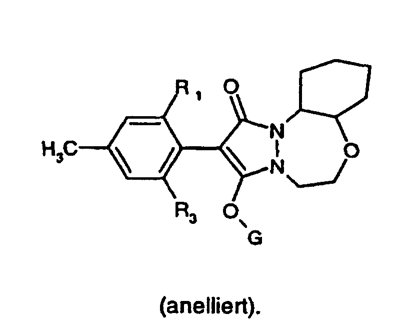

Verbindungen der Formel I, worin bei den Gruppen Z₁, Z₂ oder Z₃ ein Alkylenring mindestens ein Ringatom der Gruppen Z₁, Z₂ oder Z₃ überbrückt, haben beispielsweise die folgende Struktur

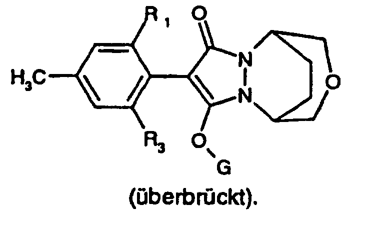

Für das erfindungsgemäße Mittel bevorzugte Herbizide der Formel I sind dadurch gekennzeichnet, daß R₁ und R₃ unabhängig voneinander Ethyl, Halogenethyl, Ethinyl, C₁-C₂-Alkoxy oder C₁-C₂-Halogenalkoxy bedeuten.

Ferner sind diejenigen erfindungsgemäßen Mittel bevorzugt, worin R₄ und R₅ zusammen eine Gruppe Z₂ -C-R₁₄(R₁₅)-C-R₁₆(R₁₇)-O-C-R₁₈(R₁₉)-C-R₂₀(R₂₁)- (Z₂) bilden, worin besonders bevorzugt R₁₄, R₁₅, R₁₆, R₁₇, R₁₈, R₁₉, R₂₀ und R₂₁, Wasserstoff bedeuten.

Eine weitere bevorzugte Gruppe von erfindungsgemäßen Mitteln ist dadurch gekennzeichnet, daß in der Formel l R₃₀, R₃₁, R₃₂ und R₃₃ unabhängig voneinander Wasserstoff, C₁-C₈-Alkyl, C₁-C₈-Halogenalkyl, C₁-C₈-Cyanoalkyl, C₁-C₈-Nitroalkyl, C₁-C₈-Aminoalkyl, C₂-C₅-Alkenyl, C₂-C₅-Halogenalkenyl, C₃-C₈-Cycloalkyl, C₁-C₅-Alkylamino-C₁-C₅alkyl, C₂-C₈-Dialkylamino- C₁-C₅-alkyl, C₃-C₇-Cycloalkyl-C₁-C₅-alkyl, C₂-C₄-Alkoxy-alkyl, C₄-C₆-Alkenyloxy-alkyl, C₄-C₆-Alkinyloxy-alkyl, C₂-C₄-Alkylthio-alkyl, C₁-C₄-Alkysulfinyl-C₁-C₂alkyl, C₁-C₂-Alkylsulfonyl-C₁-C₂-alkyl, C₂-C₄-Alkylideneamino-oxy-C₁-C₂-alkyl, C₁-C₅-Alkylcarbonyl-C₁-C₂-alkyl, C₁-C₅-Alkoxycarbonyl-C₁-C₂-alkyl, C₁-C₅-Amino-carbonyl-C₁-C₂alkyl, C₂-C₈-Dialkylamino-carbonyl-C₁-C₂-alkyl, C₁-C₅-Alkylcarbonylamino-C₁-C₂-alkyl, C₂-C₅-Alkylcarbonyl-(C₁-C₂-alkyl)-aminoalkyl, C₃-C₆-Trialkylsilyl-C₁-C₅-alkyl, Phenyl-C₁-C₂alkyl, Heteroaryl-C₁-C₂-alkyl, Phenoxy-C₁-C₂-alkyl, Heteroaryloxy-C₁-C₂-alkyl, Phenyl oder Heteroaryl bedeuten;
R₃₄, R₃₅ und R₃₆ unabhängig voneinander Wasserstoff,
C₁-C₈-Alkyl, C₁-C₈-Halogenalkyl, C₁-C₈-Cyanoalkyl, C₁-C₈-Nitroalkyl, C₁-C₈-Aminoalkyl, C₂-C₅-Alkenyl, C₂-C₅-Halogenalkenyl, C₃-C₈-Cycloalkyl, C₁-C₅-Alkylamino-C₁-C₅-alkyl, C₂-C₈-Dialkylamino-C₁-C₅-alkyl, C₃-C₇-Cycloalkyl-C₁-C₅-alkyl, C₂-C₄-Alkoxy-alkyl, C₄-C₆-Alkenyloxyalkyl, C₄-C₆-Alkinyloxy-alkyl, C₂-C₄-Alkylthio-alkyl, C₁-C₄-Alkysulfinyl-C₁-C₂-alkyl, C₁-C₂-Alkylsulfonyl-C₁-C₂-alkyl, C₂-C₄-Alkylideneamino-oxy-C₁-C₂-alkyl, C₁-C₅-Alkylcarbonyl-C₁-C₂alkyl, C₁-C₅-Alkoxycarbonyl-C₁-C₂-alkyl, C₁-C₅-Amino-carbonyl-C₁-C₂-alkyl, C₂-C₈-Dialkylamino-carbonyl-C₁-C₂-alkyl, C₁-C₅-Alkylcarbonylamino-C₁-C₂-alkyl, C₂-C₅-Alkylcarbonyl-(C₁-C₂-alkyl)-aminoalkyl, C₃-C₆-Trialkylsilyl-C₁-C₅-alkyl, Phenyl-C₁-C₂-alkyl, Heteroaryl-C₁-C₂-alkyl, Phenoxy-C₁-C₂-alkyl, Heteroaryloxy-C₁-C₂-alkyl, Phenyl oder Heteroaryl, Benzyloxy oder Phenoxy, wobei die Benzyl- und Phenylgruppen ihrerseits durch Halogen, Nitro, Cyano, Amino, Dimethylamino, Hydroxy, Methoxy, Ethoxy, Methylthio, Ethylthio, Formyl, Acetyl, Propionyl, Carboxyl, C₁-C₅-Alkoxycarbonyl oder C₁- oder C₂-Halogenalkyl substituiert sein können, bedeuten; und
R₃₇ C₁-C₈-Alkyl, C₁-C₈-Halogenalkyl, C₁-C₈-Cyanoalkyl, C₁-C₈-Nitroalkyl, C₁-C₈-Aminoalkyl, C₂-C₅-Alkenyl, C₂-C₅-Halogenalkenyl, C₃-C₈-Cycloalkyl, C₁-C₅-Alkylamino-C₁-C₅-alkyl, C₂-C₈-Dialkylamino- C₁-C₅-alkyl, C₃-C₇-Cycloalkyl-C₁-C₅-alkyl, C₂-C₄-Alkoxy-alkyl, C₄-C₆-Alkenyloxy-alkyl, C₄-C₆-Alkinyloxy-alkyl, C₂-C₄-Alkylthio-alkyl, C₁-C₄-Alkylsulfinyl-C₁-C₂-alkyl, C₁-C₂-Alkylsulfonyl-C₁-C₂-alkyl, C₂-C₄-Alkylideneamino-oxy-C₁-C₂-alkyl, C₁-C₅-Alkylcarbonyl-C₁-C₂alkyl, C₁-C₅-Alkoxycarbonyl-C₁-C₂-alkyl, C₁-C₅-Amino-carbonyl-C₁-C₂-alkyl, C₂-C₈-Dialkylamino-carbonyl-C₁-C₂-alkyl, C₁-C₅-Alkylcarbonylamino-C₁-C₂-alkyl, C₂-C₅-Alkylcarbonyl-(C₁-C₂-alkyl)-aminoalkyl, C₃-C₆-Trialkylsilyl-C₁-C₅-alkyl, Phenyl-C₁-C₂-alkyl, Heteroaryl- C₁-C₂-alkyl, Phenoxy-C₁-C₂-alkyl, Heteroaryloxy-C₁-C₂-alkyl, Phenyl oder Heteroaryl, Benzyloxy oder Phenoxy, wobei die Benzyl- und Phenylgruppen ihrerseits durch Halogen, Nitro, Cyano, Amino, Dimethylamino, Hydroxy, Methoxy, Ethoxy, Methylthio, Ethylthio, Formyl, Acetyl, Propionyl, Carboxyl, C₁-C₂-Alkoxycarbonyl oder C₁- oder C₂-Halogenalkyl substituiert sein können; oder R₃₇ C₁-C₈-Alkylcarbonyl bedeutet.

Besonders bevorzugt sind diejenigen erfindungsgemäßen Mittel, worin in der Formel I R₃₀, R₃₁, R₃₂ und R₃₃ unabhängig voneinander Wasserstoff,
C₁-C₈-Alkyl, C₁-C₈-Halogenalkyl, C₂-C₅-Alkenyl, C₂-C₅-Halogenalkenyl, C₃-C₈-Cycloalkyl, C₃-C₇-Cycloalkyl-C₁-C₂-alkyl, C₂-C₄-Alkoxy-alkyl, Phenyl, Heteroaryl, Phenyl-C₁-C₂-alkyl, Heteroaryl- C₁-C₂-alkyl, Phenoxy-C₁-C₂-alkyl, Heteroaryloxy-C₁-C₂-alkyl bedeuten;
R₃₄, R₃₅ und R₃₆ unabhängig voneinander Wasserstoff,
C₁-C₈-Alkyl, C₁-C₈-Halogenalkyl, C₂-C₅-Alkenyl, C₂-C₅-Halogenalkenyl, C₃-C₈-Cycloalkyl, C₃-C₇-Cycloalkyl-C₁-C₂-alkyl, C₂-C₄-Alkoxy-alkyl, Phenyl, Heteroaryl, Phenyl-C₁-C₂-alkyl, Heteroaryl- C₁-C₂-alkyl, Phenoxy-C₁-C₂-alkyl, Heteroaryloxy-C₁-C₂-alkyl, C₁-C₆-Alkoxy, C₁-C₃-Alkylamino oder Di-(C₁-C₃-alkyl)-amino bedeuten; und
R₃₇ C₁-C₈-Alkyl, C₁-C₈-Halogenalkyl, C₂-C₅-Alkenyl, C₂-C₅-Halogenalkenyl, C₃-C₈-Cycloalkyl, C₃-C₇-Cycloalkyl-C₁-C₂-alkyl, C₂-C₄-Alkoxy-alkyl, Phenyl, Heteroaryl, Phenyl-C₁-C₂-alkyl, Heteroaryl- C₁-C₂-alkyl, Phenoxy-C₁-C₂-alkyl, Heteroaryloxy-C₁-C₂-alkyl, C₁-C₆-Alkoxy, C₁-C₃-Alkylamino, Di-(C₁-C₃-alkyl)-amino oder C₁-C₈-Alkylcarbonyl bedeutet.

Ein im erfindungsgemäßen Mittel besonders bevorzugter Safener ist Cloquintocet-mexyl. Als geeignetes Öladditiv ist im Rahmen der vorliegenden Erfindung MERGE® und Actiprom® besonders hervorzuheben.

Die erfindungsgemäßen Mittel können auch Salze, die die Verbindungen der Formel I mit Säuren bilden können, enthalten. Geeignete Säuren für die Bildung der Säureadditionssalze sind sowohl organische wie anorganische Säuren. Beispiele solcher Säuren sind Salzsäure, Bromwasserstoffsäure, Salpetersäure, Phosphorsäuren, Schwefelsäure, Essigsäure, Propionsäure, Buttersäure, Valeriansäure, Oxalsäure, Malonsäure, Fumarsäure, organische Sulfonsäuren, Milchsäure, Weinsäure, Zitronensäure und Salicylsäure. Bei den Salzen der Verbindungen der Formel I mit acidem Wasserstoff handelt es sich auch um Alkalimetallsalze, z.B. Natrium- und Kaliumsalze; Erdalkalimetallsalze, z.B. Calcium- und Magnesiumsalze; Ammoniumsalze, d.h. unsubstituierte Ammoniumsalze und mono- oder mehrfach-substituierte Ammoniumsalze, sowie um Salze mit anderen organischen Stickstoffbasen. Entsprechend kommen als Salzbildner Alkali- und Erdalkalimetallhydroxide in Frage, insbesondere die Hydroxide von Lithium, Natrium, Kalium, Magnesium oder Calcium, wobei denen von Natrium oder Kalium besondere Bedeutung zukommt.

Als Beispiele für zur Ammoniumsalzbildung geeignete Amine kommen sowohl Ammoniak wie auch primäre, sekundäre und tertiäre C₁-C₁₈-Alkylamine, C₁-C₄-Hydroxyalkylamine und C₂-C₄-Alkoxyalkylamine in Betracht, beispielsweise Methylamin, Ethylamin, n-Propylamin, iso-Propylamin, die vier isomeren Butylamine, n-Amylamin, iso-Amylamin, Hexylamin, Heptylamin, Octylamin, Nonylamin, Decylamin, Pentadecylamin, Hexadecylamin, Heptadecylamin, Octadecylamin, Methyl-ethylamin, Methyl-iso-propylamin, Methylhexylamin, Methyl-nonylamin, Methyl-pentadecylamin, Methyl-octadecylamin, Ethylbutylamin, Ethyl-heptylamin, Ethyl-octylamin, Hexyl-heptylamin, Hexyl-octylamin, Dimethylamin, Diethylamin, Di-n-propylamin, Di-iso-propylamin, Di-n-butylamin, Di-namylamin, Di-iso-amylamin, Dihexylamin, Diheptylamin, Dioctylamin, Ethanolamin, n-Propanolamin, iso-Propanolamin, N,N-Diethanolamin, N-Ethylpropanolamin, N-Butylethanolamin, Allylamin, n-Butenyl-2-amin, n-Pentenyl-2-amin, 2,3-Dimethylbutenyl-2-amin, Di-butenyl-2-amin, n-Hexenyl-2-amin, Propylendiamin, Trimethylamin, Triethylamin, Tri-n-propylamin, Tri-iso-propylamin, Tri-n-butylamin, Tri-iso-butylamin, Tri-sek.-butylamin, Tri-n-amylamin, Methoxyethylamin und Ethoxyethylamin; heterocyclische Amine wie z.B. Pyridin, Chinolin, iso-Chinolin, Morpholin, N-Methylmorpholin, Thiomorpholin, Piperidin, Pyrrolidin, Indolin, Chinuclidin und Azepin; primäre Arylamine wie z.B. Aniline, Methoxyaniline, Ethoxyaniline, o,m,p-Toluidine, Phenylendiamine, Benzidine, Naphthylamine und o,m,p-Chloraniline; insbesondere aber Triethylamin, iso-Propylamin und Di-iso-propylamin.

Die unsymmetrisch substituierten Verbindungen der Formel I fallen, sofern nicht chirale Edukte verwendet werden, im allgemeinen bei den in dieser Anmeldung beschrieben Verfahren als Racemate an. Die Stereoisomeren können sodann nach bekannten Methoden, wie etwa fraktionierter Kristallisation nach Salzbildung mit optisch reinen Basen, Säuren oder Metallkomplexen, oder aber durch chromatographische Verfahren wie z.B. Hochdruckflüssigkeitschromatographie (HPLC) an Acetylcellulose aufgrund physikochemischer Eigenschaften getrennt werden. In der vorliegenden Erfindung sind unter den Verbindungen der Formel I sowohl die angereicherten und optisch reinen Formen der jeweiligen Stereoisomeren als auch die Racemate bzw. Diastereomere zu verstehen. Sofern nicht speziell auf die einzelnen optischen Antipoden hingewiesen wird, sind diejenigen racemischen Gemische unter der gegebenen Formel zu verstehen, die beim angegebenen Herstellungsverfahren entstehen. Liegt eine aliphatische C=C-Doppelbindung vor, so kann auch geometrische Isomerie auftreten.

Die Verbindungen der Formel I können, auch in Abhängigkeit von der Art der Substituenten, als geometrische, und/oder optische Isomere und Isomerengemische sowie als Tautomere und Tautomerengemische vorliegen. Beispielsweise können die Verbindungen der Formel 1, worin die Gruppe G Wasserstoff bedeutet, in den folgenden tautomeren Gleichgewichten vorliegen:

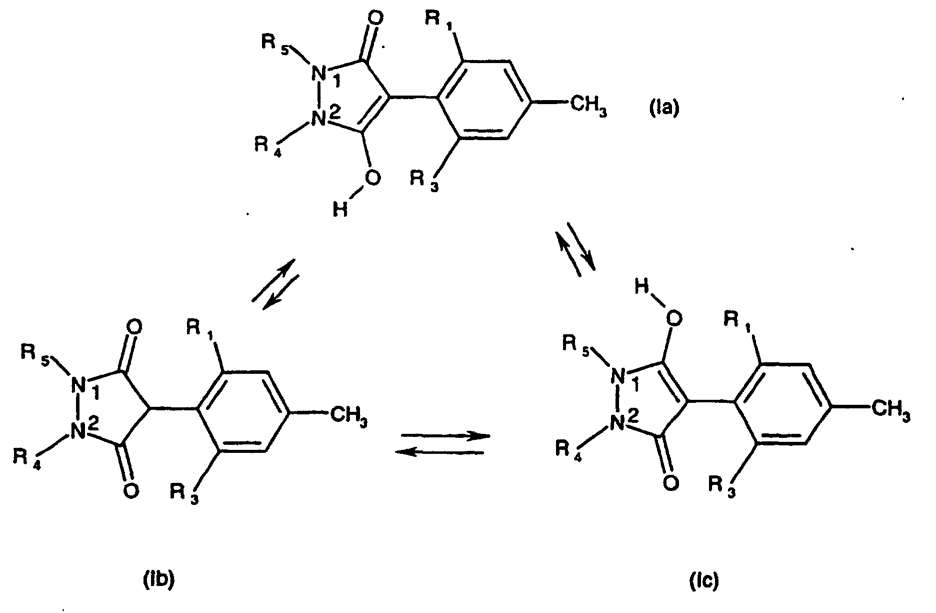

Wenn G verschieden von Wasserstoff ist und Z die Gruppe Z₁ oder Z₃ bedeutet oder wenn G verschieden von Wasserstoff ist und Z₂unsymetrisch substituiert, aneliert oder spiroverknüpft ist, kann die Verbindung der Formel I als Isomer der Formel td 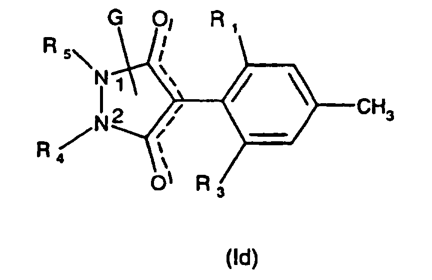 vorliegen.

Verfahren zur Herstellung von Verbindungen, die hinsichtlich der Bedeutung der Substituenten R₄ und R₅ von den Verbindungen der Formel I gemäß vorliegender Erfindung verschieden sind, sind beispielsweise in WO 96/21652 beschrieben. Die Verbindungen der Formel I gemäß vorliegender Erfindung können analog den in WO 96/21652 beschriebenen Verfahren hergestellt werden.

Die für derartige Verfahren als Ausgangsprodukte eingesetzten Verbindungen der Formel II 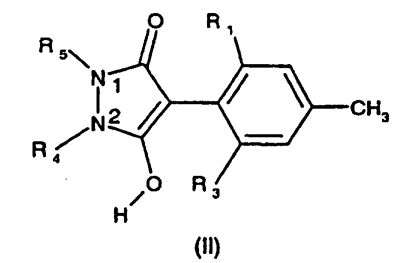 worin R₁, R₃, R₄ und R₅ die unter Formel 1 angegebene Bedeutungen haben, können beispielsweise hergestellt werden, indem man eine Verbindung der Formel III 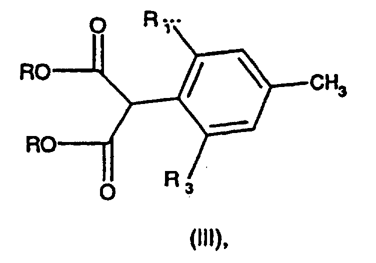 worin R C₁-C₆-Alkyl, C₁-C₆-Halogenalkyl, vorzugsweise Methyl, Ethyl oder Trichlorethyl bedeutet und R₁ und R₃ die unter Formel 1 angegebenen Bedeutungen haben, in einem inerten, organischen Lösungsmittel gegebenfalls in Gegenwart einer Base mit einer Verbindung der Formel IV oder IVa 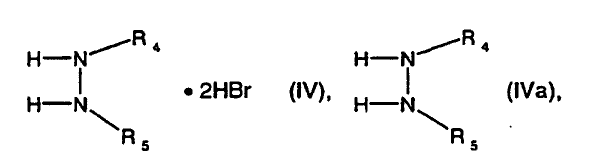 worin R₄ und R₅ die unter Formel I angegebene Bedeutung haben, umsetzt. Weitere Herstellungsverfahren zu Verbindungen der Formel II sind beispielsweise auch in WO 92/16510 beschrieben.

Die Verbindungen der Formel III sind entweder bekannt oder lassen sich analog bekannter Verfahren herstellen. Verfahren zur Herstellung von Verbindungen der Formel III sowie deren Umsetzung mit Hydrazinen sind beispielsweise in WO 97/02243 beschrieben. Verbindungen der Formel III, worin R C₁-C₆-Alkyl, C₁-C₆-Halogenalkyl, vorzugsweise Methyl Ethyl oder Trichlorethyl bedeutet und R₁, R₂ und R₃ die unter Formel I angegebenen Bedeutungen haben, lassen sich analog dem Fachmann bekannten Methoden herstellen. Beispielsweise können Verbindungen der Formel III, worin R C₁-C₆-Alkyl, C₁-C₆-Halogenalkyl, vorzugsweise Methyl ,Ethyl oder Trichlorethyl bedeutet und R₁, R₂ und R₃ unabhängig voneinander C₁-C₄-Alkyl, C₂-C₄-Alkenyl, C₂-C₄-Alkinyl bedeuten nach dem Verfahren der Kreuzkopplung nach Stille (J.K. Stille, Angew. Chem. 1986, 98, 504-519), Sonogashira (K. Sonogashira et al., Tetrahedron Lett. 1975, 4467-4470), Suzuki (N. Miyaura, A. Suzuki, Chem. Rev. 1995, 95, 2457-2483) oder Heck (R.F. Heck, Org. React. 1982, 27, 345-390) und gegebenenfalls anschließender Hydrierung hergestellt werden. Das folgende Reaktionsschema illustriert dieses Vorgehen:

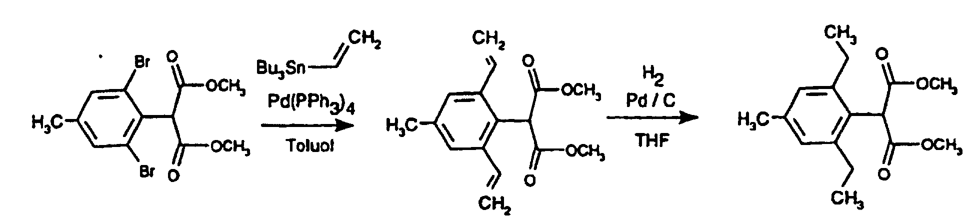

Die Verbindungen der Formel IV und IVa sind entweder bekannt oder lassen sich analog bekannter Verfahren herstellen. Verfahren zur Herstellung von Verbindungen der Formel IV sind beispielsweise in WO 95/00521, beschrieben. Diese Verbindungen können z.B. hergestellt werden, indem man eine Verbindung der Formel V 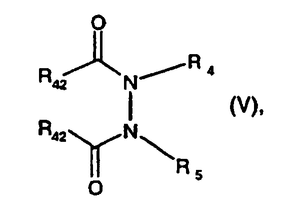 worin R₄₂ Wasserstoff, C₁-C₄-Alkyl, C₁-C₆-Alkoxy, C₁-C₆-Halogenalkoxy, Benzyloxy, vorzugsweise Wasserstoff, Methyl, Methoxy, Ethoxy, Trichlorethoxy, *t*-Butoxy oder Benzyloxy bedeutet und R₄ und R₅ die unter Formel 1 angegebene Bedeutung haben, in Gegenwart einer Base oder einer Säure in einem inerten Lösungsmittel erwärmt. Verbindungen der Formel V, worin R₄₂ Wasserstoff, C₁-C₄-Alkyl, C₁-C₆-Alkoxy, C₁-C₆-Halogenalkoxy, Benzyloxy, vorzugsweise Wasserstoff, Methyl, Methoxy, Ethoxy, Trichlorethoxy, *t*-Butoxy oder Benzyloxy bedeutet und R₄ und R₅ die unter Formel 1 angegebene Bedeutung haben, können beispielsweise hergestellt werden, indem man eine Verbindung der Formel VI 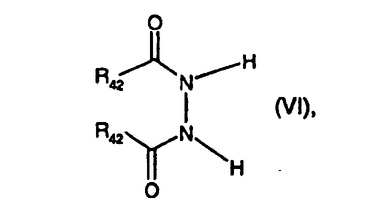 worin R₄₂ Wasserstoff, C₁-C₄-Alkyl, C₁-C₆-Alkoxy, C₁-C₆-Halogenalkoxy, Benzyloxy, vorzugsweise Wasserstoff, Methyl, Methoxy, Ethoxy, Trichlorethoxy, *t*-Butoxy oder Benzyloxy bedeutet, in Gegenwart einer Base und einem inerten Lösungsmittel mit einer Verbindung der Formel VII 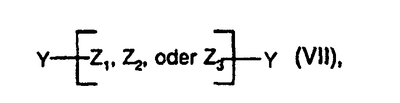 worin Y Halogen, Alkyl/Aryl Sulfonate -OSO₂R₄₃, vorzugsweise Brom, Chlor, lod, Mesylat (R₄₃ = CH₃), Triflat (R₄₃ = CF₃) oder Tosylat (R₄₃ = p-Tolyl) bedeutet und Z₁, Z₂, und Z₃ die unter Formel 1 angegebene Bedeutung haben, umsetzt. In der Formel VII sind die freien Valenzen der Gruppen Z₁, Z₂, und Z₃ jeweils an die Gruppe Y gebunden. Verbindungen der Formel VI und VII sind bekannt oder lassen sich analog dem Fachmann bekannten Methoden herstellen.

Verbindungen der Formel IV, worin R₄ und R₅ zusammen eine Gruppe Z₂
-C-R₁₄(R₁₅)-C-R₁₆(R₁₇)-O-C-R₁₈(R₁₉)-C-R₂₀(R₂₁)- (Z₂), worin R₁₄, R₁₅, R₁₆, R₁₇, R₁₈, R₁₉, R₂₀ und R₂₁ Wasserstoff bedeuten, können z.B. nach folgendem Reaktionsschema hergestellt werden:

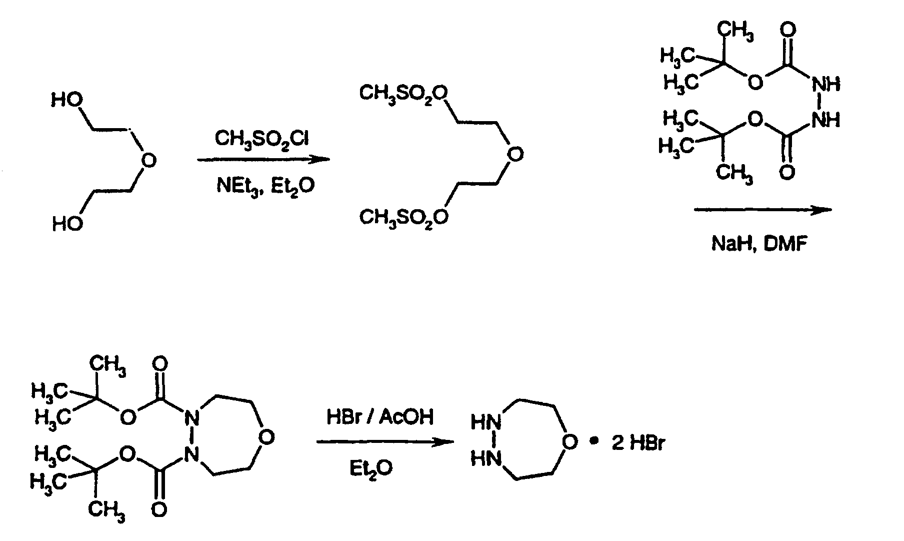

Die Endprodukte der Formel I können auf übliche Weise durch Einengen und/oder Verdampfen des Lösungsmittels isoliert und durch Umkristallisieren oder Zerreiben des festen Rückstandes in Lösungsmitteln, in denen sie sich nicht gut lösen, wie Ether, Alkanen, aromatischen Kohlenwasserstoffen oder chlorierten Kohlenwasserstoffen oder mittels Chromatographie gereinigt werden. Salze von Verbindungen der Formel I können in an sich bekannter Weise hergestellt werden. Derartige Herstellungsmethoden sind beispielsweise in WO 96/21652 beschrieben.

### Herstellungsbeispiele:

### Beispiel H1: Herstellung von:

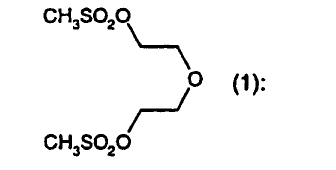

Zu einer auf -10°C gekühlten Lösung aus 80,6 g (0,76 mol) Diethylenglykol und 159,9 g (1,58 mol) Triethylamin in 1500 ml Diethylether gibt man eine Lösung aus 177,6 g Methansulfochlorid in 400 ml Diethylether innerhalb von einer Stunde tropfenweise hinzu, wobei die Temperatur unter 5 °C gehalten wird. Nach 30 minütigem Rühren bei einer Temperatur von 0°C entfernt man die Kühlung. Nach 2 Stunden gibt man bei einer Temperatur von 20 °C 12 ml Triethylamin und 12 ml Methansulfochlorid hinzu und rührt für weitere 4 Stunden. Anschließend wird die so erhaltene weiße Suspension auf einen Saugfilter gegeben und der Rückstand zweimal mit 300 ml Diethylether gewaschen. Das Nutschgut wird in 2000 ml Essigsäureethylester aufgenommen, die Suspension 30 Minuten bei Raumtemperatur gerührt und emeut abfiltriert. Das erhaltene Filtrat wird eingedampft und der Rückstand ohne weitere Reinigung in die nächste Reaktion eingesetzt. Man erhält 216,5 g des gewünschten Rohproduktes (1) in Form weißer Kristalle.

### Beispiel H2:

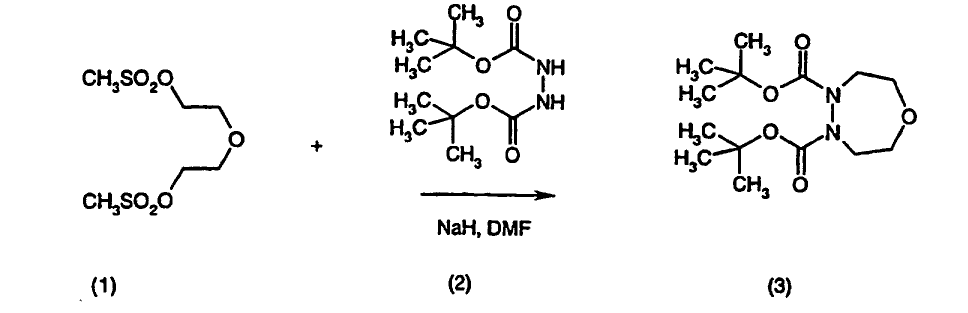

Zu einer auf 5 °C gekühlten Suspension aus 23,9 g (0,60 mol) 60%iger-Natriumhydrid in 500 ml Dimethylformamid gibt man eine Lösung aus 68,78 g (0,30 mol) (2) in 140 ml Dimethylformamid innerhalb von 30 Minuten tropfenweise hinzu. Man entfernt die Kühlung und rührt, bis die Reaktionsmischung eine Temperatur von 20 °C erreicht hat. Anschließend wird kurz auf eine Temperatur von 30 bis 40 °C aufgeheizt um den Wasserstoffabgang zu wervollständigen. Nach Abkühlen auf eine Temperatur von 0 bis 5 °C gibt man eine Lösung aus 80 g (0,305 mol) (1) in 160 ml Dimethylformamid innerhalb von 30 Minuten tropfenweise hinzu, wobei die Temperatur bei 0 bis 5 °C gehalten wird. Nach Entfernen der Kühlung und 3-stündigem Rühren bei Raumtemperatur, sowie 45 Minuten bei ca. 40 °C gibt man die Reaktionsmischung auf eine Mischung aus gesättigter Ammoniumchloridlösung, Eis und tert.-Butyl-Methylether, trennt die Phasen und wäscht anschließend die organische Phase mit Wasser (2x). Nach Trocknen der organischen Phase mit Natriumsulfat, Eindampfen und weiteres Trocknen bei einer Temperatur von 40 °C unter Vakuum erhält man 92,2 g (3) in Form eines leicht gelben Öles. Das Rohprodukt wird ohne weitere Reinigung in die nächste Reaktion eingesetzt.

### Beispiel H3:

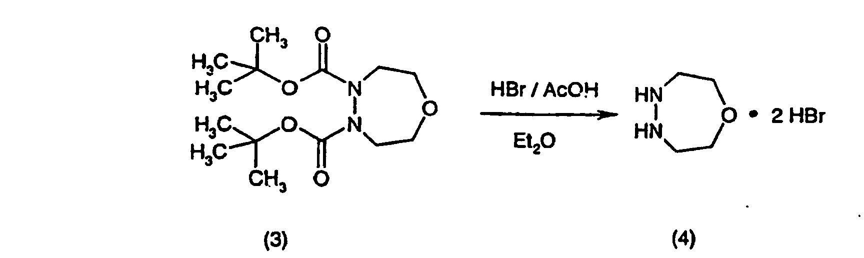

Zu einer auf 0 °C gekühlten Lösung aus 92,2 g (0,305 mol) (3) in 1200 ml Diethylether gibt man 160,5 ml einer 33 %igen Lösung aus Bromwasserstoff in Eisessig innerhalb von 30 Minuten tropfenweise hinzu. Nach Entfernen der Kühlung und anschließendem 22-stündigem Rühren bei 20 °C und 27-stündigem Rühren unter Rückfluss gibt man die erhaltene weiße Suspension auf einen Saugfilter, wäscht mit Diethylether nach, und trocknet anschließend den Filterrückstand über P₂O₅ unter Vakuum bei einer Temperatur von 50 bis 60 °C. Man erhält das Produkt (4) in einer Ausbeute von 52,9 g in Form eines weißen Feststoffes.

### Beispiel H4:

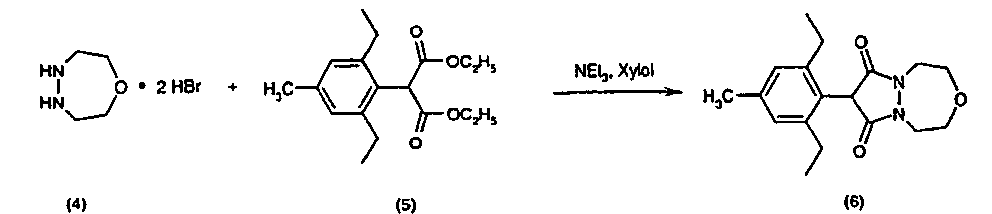

Zu einer Suspension von 4,4 g(16,5 mmol) (4) in 175 ml Xylol gibt man 10,61 ml (76 mmol) Triethylamin hinzu und entgast (4 x Vakuum/Argon). Anschließend wird die gelbe Suspension auf eine Temperatur von 60 °C erwärmt und 3 Stunden lang gerührt. Dann gibt man 5,07 g (16,5 mmol) (5) hinzu und heizt auf eine Badtemperatur von 140 °C auf, um laufend überschüssiges Triethylamin und das entstandene Ethanol abzudestillieren. Nach 3 Stunden kühlt man die Reaktionsmischung auf eine Temperatur von 40 °C ab und gibt sie in 100 ml eines Eis/Wasser-Gemisches. Mit wäßriger 1N-Natriumhydroxidlösung wird das Reaktionsgemisch alkalisch eingestellt und die wäßrige Phase (enthält das Produkt) zweimal mit Essigsäureethylester gewaschen. Nach zweimaligem Zurückwaschen der organischen Phase mit wäßriger 1 N-Natriumhydroxidlösung werden die wäßrigen Phasen vereinigt, das verbliebene Xylol abdestilliert und die vereinigten wäßrigen Phasen mit 4 N HCl unter Kühlung auf pH 2-3 eingestellt. Das dabei ausfallende Produkt gibt man auf einen Saugfilter, wäscht den Filterrückstand mit Wasser und kurz mit Hexan und trocknet anschließend den Filterrückstand im Vakuum bei einer Temperatur von 60 °C über P₂O₅. Man erhält 4,08 g (6) Feststoff mit einem Schmelzpunkt von 189-191 °C (Zers.).

### Beispiel H5:

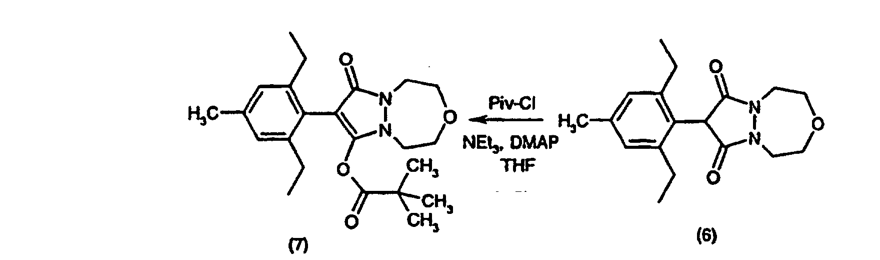

Zu einer auf eine Temperatur von 0 °C gekühlte Lösung aus 1 g (3,2 mmol) (6) und 0,65 g (6,4 mmol) Triethylamin in 30ml Tetrahydrofuran gibt man eine katalytische Menge 4-Dimethylaminopyridin hinzu. Anschließend gibt man 0,49 g (4,1 mmol) Pivaloylchlorid tropfenweise hinzu. Nach 30-minütigem Rühren bei einer Temperatur von 0 °C entfernt man die Kühlung und rührt für weitere 60 Minuten. Anschließend gibt man das Reaktionsgemisch in gesättigte wäßrige Natriumchloridlösung und trennt die organische Phase ab. Die organische Phase wird über Magnesiumsulfat getrocknet, abfiltriert und eingedampft. Nach chromatographischer Reinigung und Umkristallisation aus Diethylether erhält man 1,07 g (7) mit einem Schmelzpunkt von 122 bis 123 °C.

### Beispiel H6: Herstellung von

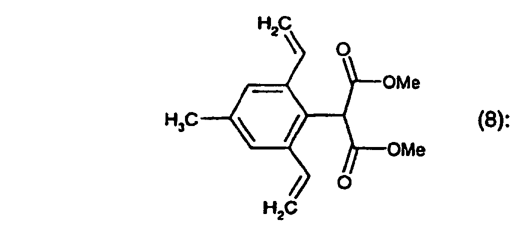

Zu einer Lösung aus 20 g 2-(2,6-Dibrom-4-methyl-phenyl)-malonsäuredimethylester (bekannt aus WO 96/35664) (52,6 mmol) in 400 ml Toluol (3 x entgast, Vakuum/Argon) gibt man zuerst 36,7 g (0,116 mol) Tributylvinylstannan und anschließend 2 g Tetrakis-Triphenylphosphin-Palladium hinzu. Dann wird die Reaktionsmischung für 9 Stunden bei einer Temperatur von 90 bis 95 °C gerührt. Nach Filtration über Hyflo und Einengen am Rotationsverdampfer erhält man nach chromatographischer Reinigung 15,3 g (8) in Form eines gelben Öles, welches ohne weitere Reinigung in die nächste Reaktion eingesetzt wird.

### Beispiel H7:

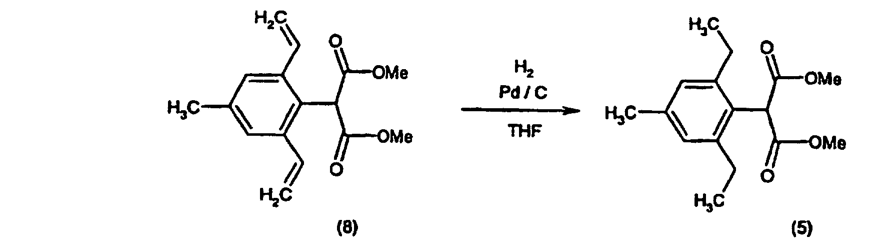

15,2 g der gemäß Beispiel H6 erhaltenen Verbindung (8) wird mit Wasserstoff über einen Palladiumkatalysator (Kohlenstoff als Träger, 7 g 5% Pd/C) in 160ml Tetrahydrofuran bei einer Temperatur von 20 bis 25°C hydriert. Nach Beendigung der Hydrierung wird das Produkt über Hyfio filtriert und das erhaltene Filtrat wird am Rotationsverdampfer eingeengt. Man erhält 13,7 g (5) in Form gelber Kristalle mit einem Schmelzpunkt von 47 bis 49 °C.

### Beispiel H8:

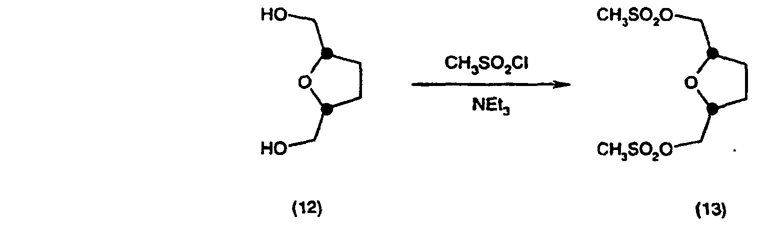

Zu einer auf 0-3°C gekühlten Lösung aus 37,1 g (0,28 mol) *cis*-2,5-Bis(hydroxymethyl)tetrahydrofuran (12) und 65,3 g (0,65 mol) Triethylamin in 400 ml Methylenchlorid gibt man 67,8 g (0,59 mol) Methansulfochlorid tropfenweise hinzu, wobei die Temperatur unter 7°C gehalten wird. Anschließend wird über Nacht bei einer Temperatur von 20°C gerührt. Die so erhaltene weiße Suspension wird auf einen Saugfilter gegeben, der Rückstand mit Methylenchlorid gewaschen und das Filtrat eingedampft. Der Rückstand wird in Essigsäureethylester aufgenommen, mit Wasser (2x) und mit gesättigter wäßriger Natriumchloridlösung (1x) gewaschen, getrocknet (Na₂SO₄) und eingeengt. Man erhält 72,7 g der Dimesylatverbindung (13) als rohes Öl, welches ohne weitere Reinigung in die nächste Reaktion eingesetzt wird.

Das Edukt (12) ist in der Literatur bekannt: siehe z.B. K. Naemura et al., Tetrahedron Asymmetry **1993,** 4, 911-918.

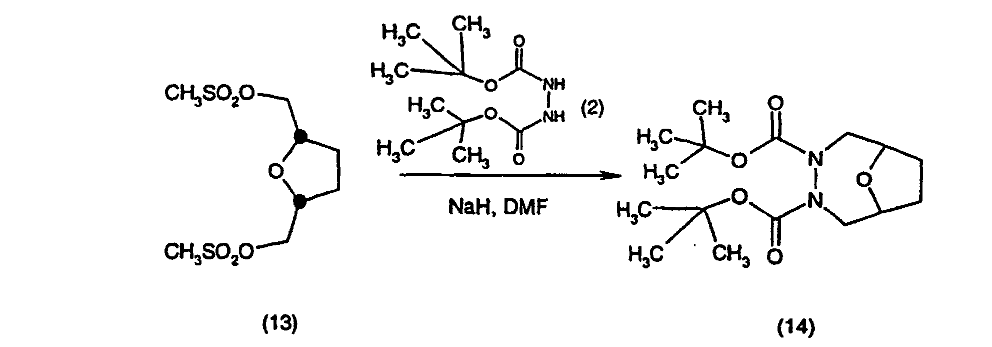

### Beispiel H9:

Analog zum Herstellungsbeispiel H2, ausgehend aus 21,0 g (0,53 mol) 60%iger-NaH, 58,4 g (0,25 mol) (2) und 72,5 g (0,25 mol) Dimesylat (13) in insgesamt 840 ml Dimethylformamid, erhält man (14) als rohes braunes Öl. Nach chromatographischer Reinigung werden 53,7 g der reinen Verbindung (14) als weißer Feststoff mit einem Schmelzpunkt von 81 bis 83 °C erhalten.

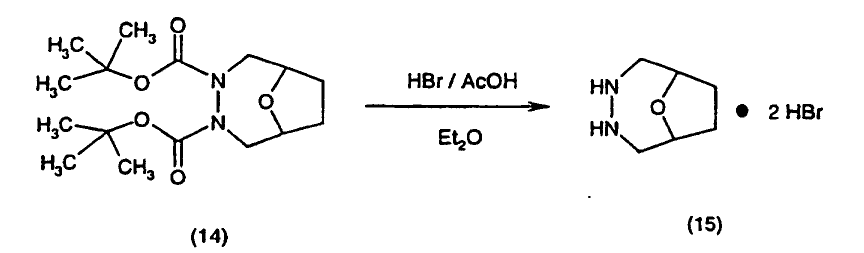

### Beispiel H10:

Analog zum Herstellungsbeispiel H3, ausgehend aus 53,5 g (0,16 mol) (14) in 800 ml Diethylether und 90 ml einer 33%igen Lösung aus Bromwasserstoff in konz. Essigsäure, erhält man 36,5 g des bicyclischen Hydrazins (15) als Feststoff mit einem Schmelzpunkt von 262 bis 264 °C.

### Beispiel H11:

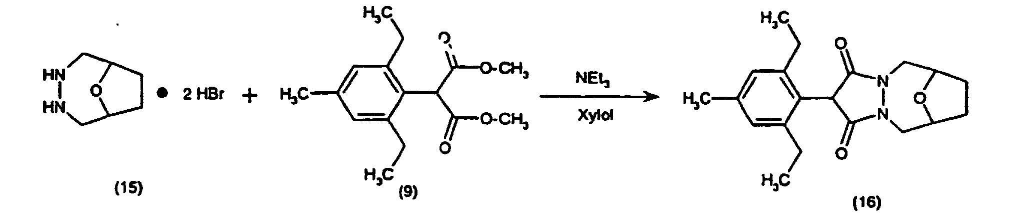

Analog zum Herstellungsbeispiel H4, ausgehend aus 0,105 mol des Malonats (9) und 30,4 g (0,105 mol) des Hydrazins (15), erhält man 29,7 g der Verbindung (16) als Feststoff mit einem Schmelzpunkt von 287 °C.

### Beispiel

### H12:

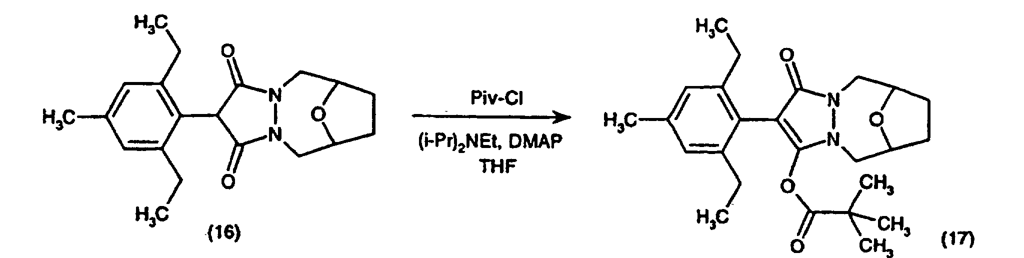

Analog zum Herstellungsbeispiel H9, ausgehend aus 1,1 g (3,2 mmol) (16), erhält man 0,83 g des Pivaloylesters (17) als Feststoff mit einem Schmelzpunkt von 141-143 °C.

Ist in der folgenden Tabelle für den Substituenten G eine Formel dargestellt, so ist die linke Seite dieser Formel der Verknüpfungspunkt mit dem Sauerstoffatom des Heterocyclus. Die übrigen endständigen Valenzen stellen Methylgruppen dar. Schmelzpunkte sind in °C angegeben.

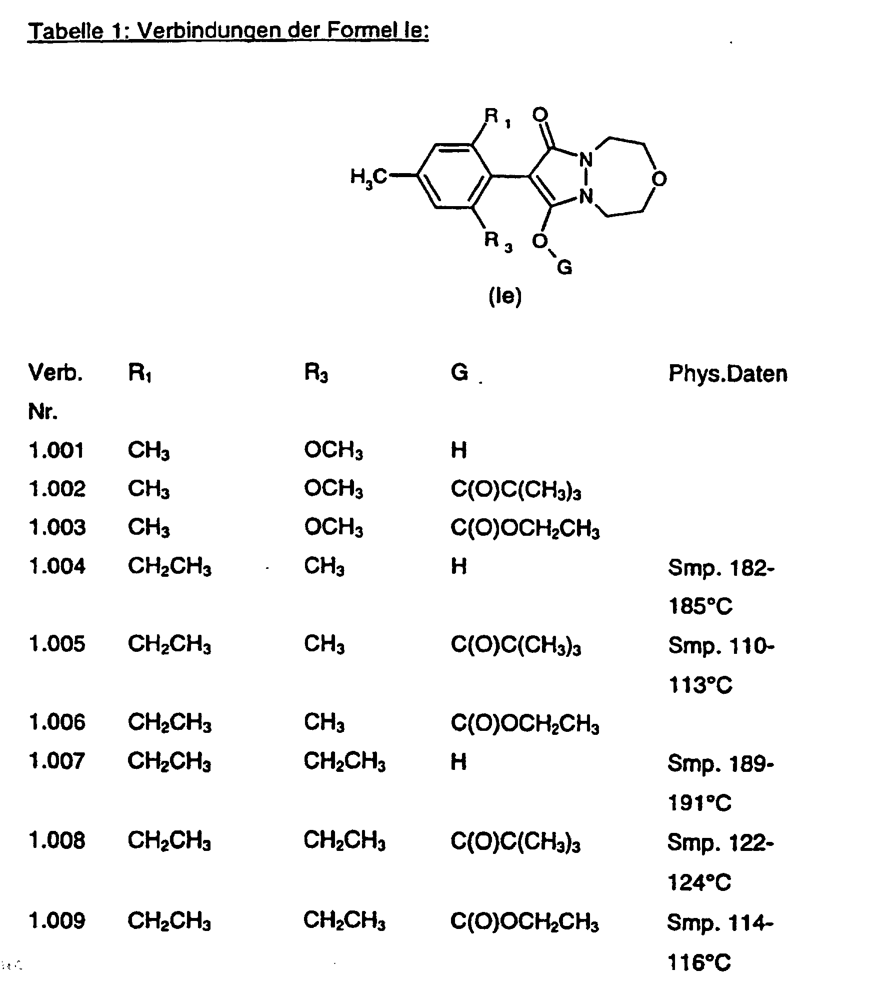

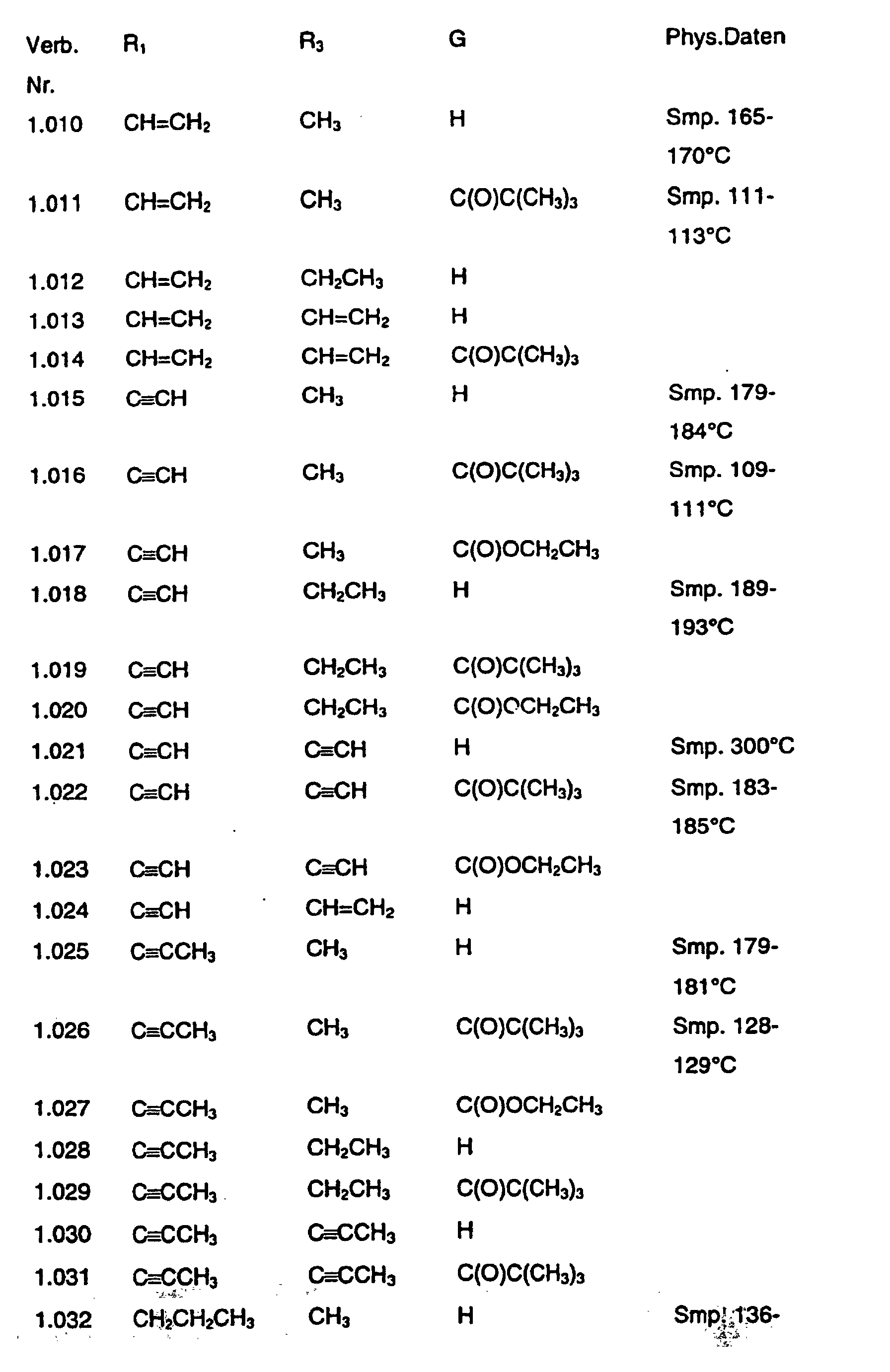

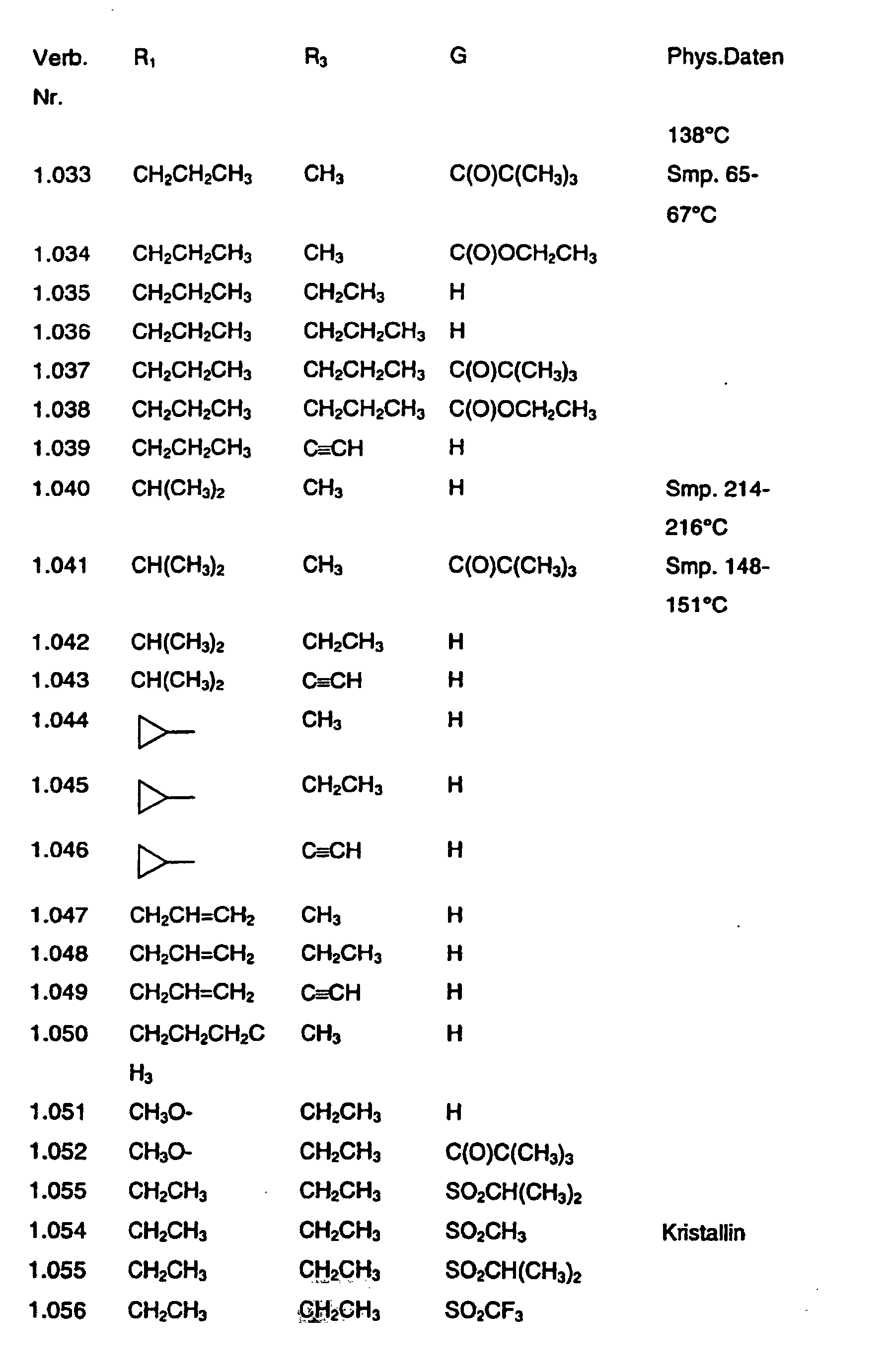

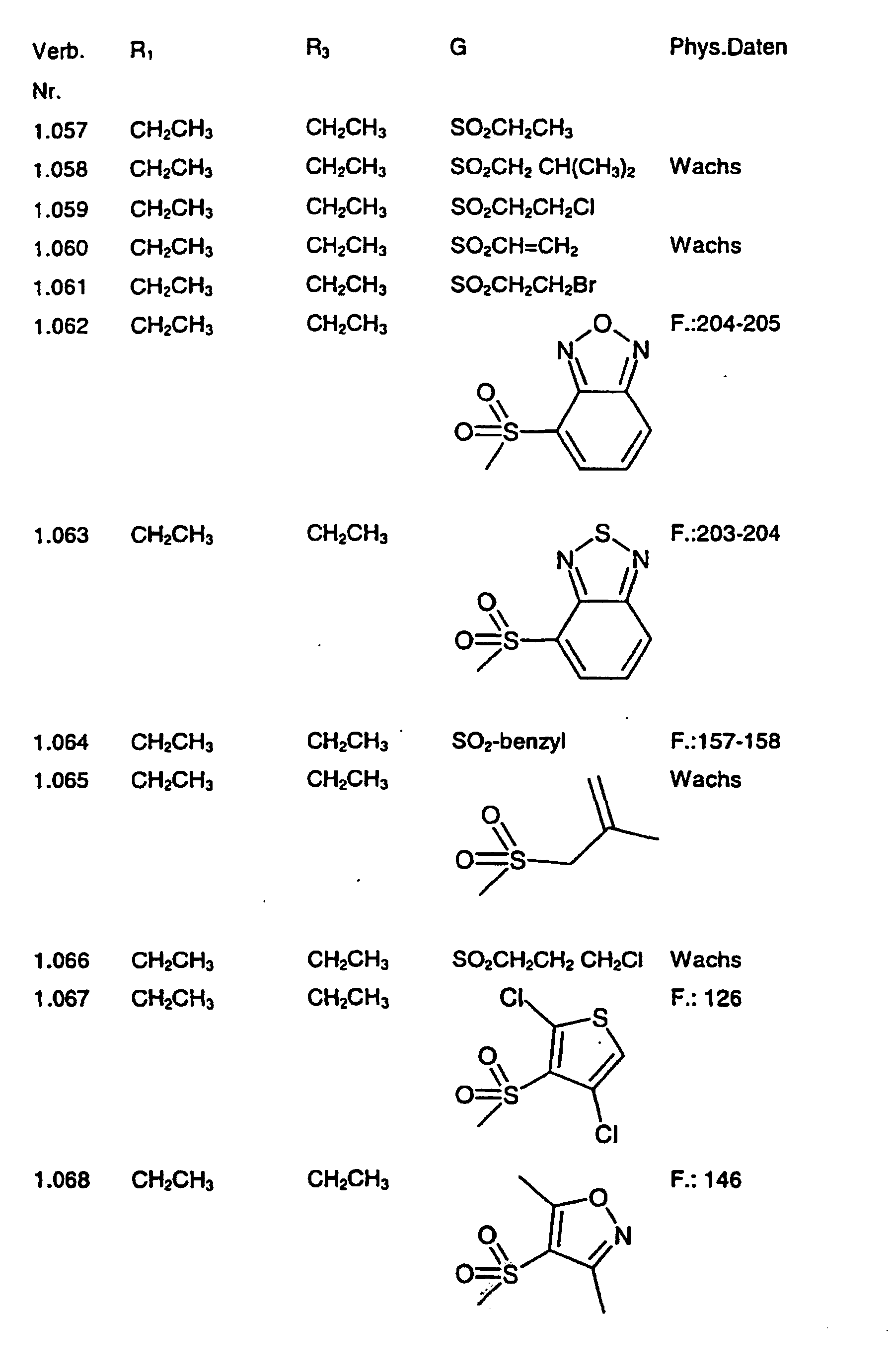

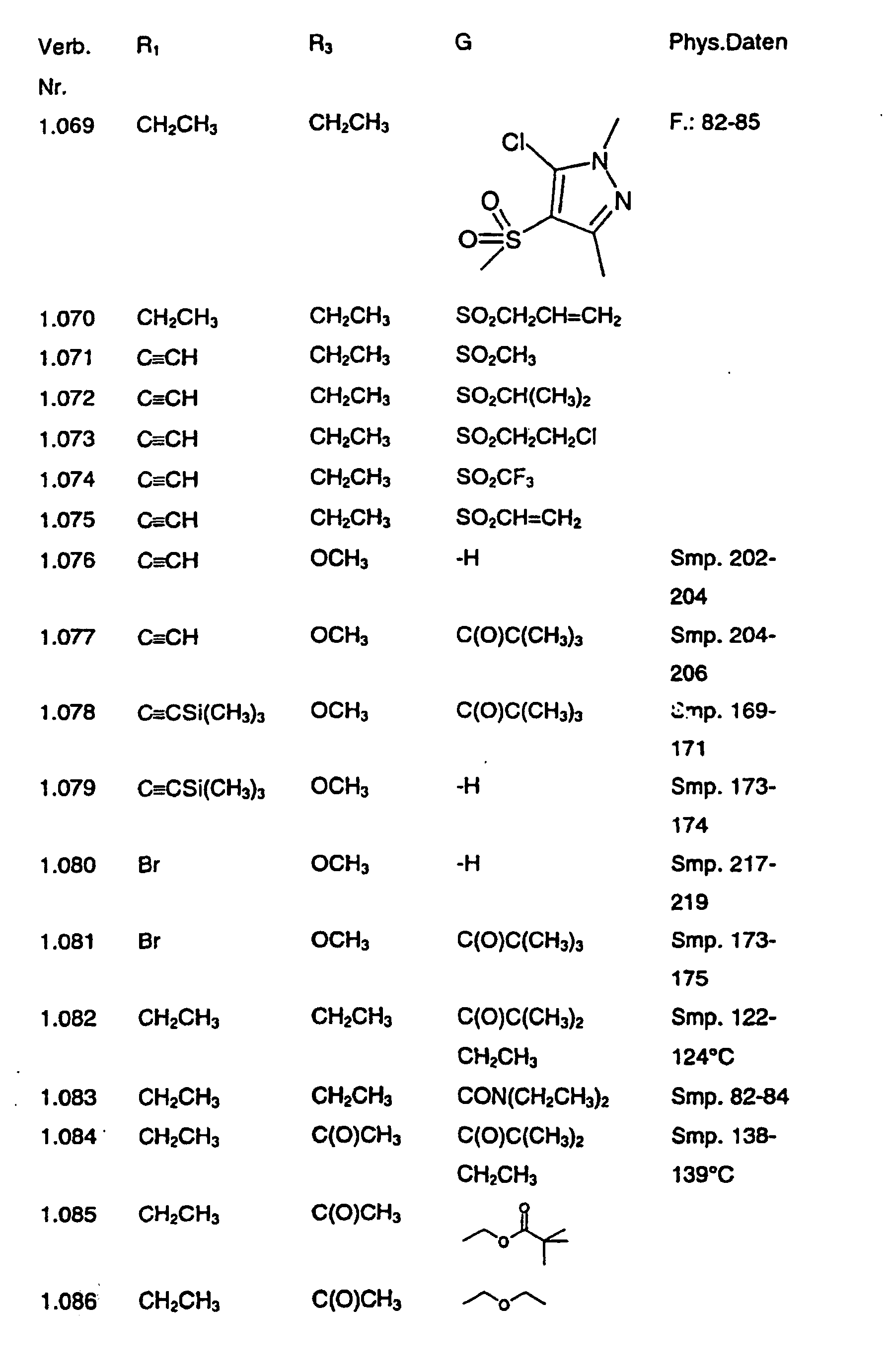

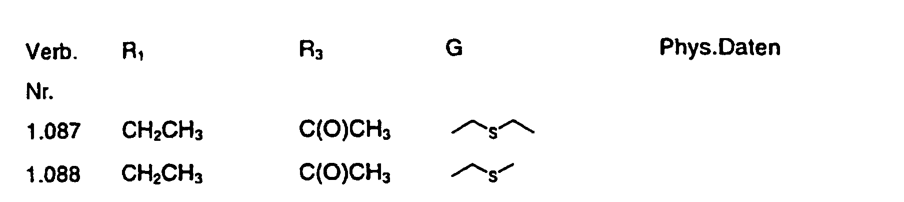

Die Erfindung betrifft auch ein Verfahren zum selektiven Bekämpfen von Unkräutern in Nutzpflanzenkulturen, welches darin besteht, daß man die Nutzpflanzen, deren Samen oder Stecklinge oder deren Anbaufläche a) mit einer herbizid wirksamen Menge eines Herbizids der Formel I, b) einer herbizid-antagonistisch wirksamen Menge eines Safeners ausgewählt aus Cloquintocet, einem Alkali-, Erdalkali-, Sulfonium- oder Ammoniumkation des Cloquintocets, oder Cloquintocet-mexyl, Mefenpyr, ein Alkali-, Erdalkali-, Sulfoniumoder Ammoniumkation des Mefenpyrs oder Mefenpyr-diethyl und c) einem Additiv enthaltend ein Öl pflanzlichen oder tierischen Ursprungs oder deren alkylierte Derivate, oder ein Mineralöl oder Mischungen davon, behandelt.

Als Kulturpflanzen, welche durch die Safener Cloquintocet, einem Alkali-, Erdalkali-, Sulfonium- oder Ammoniumkation des Cloquintocets, oder Cloquintocet-mexyl, Mefenpyr, ein Alkali-, Erdalkali-, Sulfonium- oder Ammoniumkation des Mefenpyrs oder Mefenpyr-diethyl gegen die schädigende Wirkung der oben erwähnten Herbizide geschützt werden können, kommen insbesondere Getreide, Baumwolle, Soja, Zuckerrüben, Zuckerrohr, Plantagen, Raps, Mais und Reis, ganz besonders in Mais und Getreide in Betracht. Unter Kulturen sind auch solche zu verstehen, die durch konventionelle züchterische oder gentechnologische Methoden gegen Herbizide bzw. Herbizidklassen tolerant gemacht worden sind. Diese sind z.B. IMI Maize, Poast Protected Maize (Sethoxydim-Toleranz), Liberty Link Maize, B.tJLiberty Link Maize, IMI/Liberty Link Maize, IMI/Liberty Link /B.t. Maize, Roundup Ready Maize und Roundup Ready/B.t. Maize.

Bei den zu bekämpfenden Unkräutern kann es sich sowohl um dikotyle, vorzugsweise aber um monokotyle Unkräuter handeln, wie zum Beispiel die monokotylen Unkräuter Avena, Agrostis, Phalaris, Lolium, Bromus, Alopecurus, Setaria, Digitaria Brachiaria, Echinochloa, Panicum, Sorghum hal./bic., Rottboellia, Cyperus, Brachiaria, Echinochloa, Scirpus, Monochoria, und Sagittaria und die dikotylen Unkräuter Sinapis, Chenopodium, Stellaria, Galium, Viola, Veronica, Matricaria, Papaver, Solanum Abutilon, Sida, Xanthium, Amaranthus, Ipomoea und Chrysanthemum.

Als Anbauflächen gelten die bereits mit den Kulturpflanzen bewachsenen oder mit dem Saatgut dieser Kulturpflanzen beschickten Bodenareale wie auch die zur Bebauung mit diesen Kulturpflanzen bestimmten Böden.

Ein erfindungsgemäßer Safener kann je nach Anwendungszweck zur Vorbehandlung des Saatgutes der Kulturpflanze (Beizung des Samens oder der Stecklinge) eingesetzt oder vor oder nach der Saat in den Boden gegeben werden. Er kann aber auch für sich allein oder zusammen mit dem Herbizid und dem Öladditiv nach dem Auflaufen der Pflanzen appliziert werden. Die Behandlung der Pflanzen oder des Saatgutes mit dem Safener kann daher grundsätztich unabhängig vom Zeitpunkt der Applikation des Herbizids erfolgen. Die Behandlung der Pflanze kann man jedoch auch durch gleichzeitige Applikation von Herbizid, Öladditiv und Safener (z.B. als Tankmischung) vornehmen. Die zu applizierende Aufwandmenge Safener zu Herbizid richtet sich weitgehend nach der Anwendungsart. Bei einer Feldbehandlung, welche entweder unter Verwendung einer Tankmischung mit einer Kombination von Safener und Herbizid oder durch getrennte Applikation von Safener und Herbizid erfolgt, liegt in der Regel ein Verhältnis von Herbizid zu Safener von 100:1 bis 1:10, bevorzugt 20:1 bis 1:1, vor. In der Regel werden bei der Feldbehandlung 0,001 bis 1,0 kg Safener/ha, vorzugsweise 0,001 bis 0,25 kg Safener/ha, appliziert.

Die Aufwandmengen an Herbizid liegt in der Regel zwischen 0,001 bis 2 kg/ha, vorzugsweise jedoch zwischen 0,005 bis 1 kg/ha.

In dem erfindungsgemäßen Mittel betragen die Aufwandmengen an Öladditiv in der Regel zwischen 0,01 und 2 % in Bezug auf die Spritzbrühe. Beispielsweise kann das Öladditv nach Herstellung der Spritzbrühe in der gewünschten Konzentration in den Sprühtank gegeben werden.

Die erfindungsgemäß verwendeten Öladditive enthalten Methylester von C₁₂-C₁₈ Fettsäuren, beispieiswelse die Methylester der Laurinsäure, Palmitinsäure und Ölsäure. Diese Ester sind bekannt als Methyllaurat (CAS-111-82-0), Methylpalmitat (CAS-112-39-0) und Methyloleat (CAS-112-62-9). Ein bevorzugtes Fettsäuremethylesterderivat ist Emery® 2230 und 2231 (Henkel Tochtergesellschaft Cognis GMBH, DE)

Das Ausbringen und die Wirkung der Öladditive kann durch deren Kombination mit oberflächenaktiven Substanzen wie nichtionische-, anionische oder kationische Tenside verbessert werden. Beispiele für geeignete anionische, nichtionische und kationische Tenside sind in der WO 97/34485 auf den Seiten 7 und 8 aufgezählt.

Bevorzugte oberflächenaktive Substanzen sind anionische Tenside vom Typ der Dodecylbenzylsulfonate, insbesondere die Calciumsalze davon sowie nichtionische Tenside vom Typ der Fettalkoholethoxylate. Insbeondere bevorzugt sind ethoxylierte C₁₂-C₂₂-Fettalkohole mit einem Ethoxylierungsgrad zwischen 5 und 40. Beispiele für kommerziell erhältliche, bevorzugte Tenside sind die Genapol Typen (Clariant AG, Muttenz, Schweiz). Die Konzentration der oberflächenaktiven Substanzen in Bezug auf das gesamte Additiv beträgt im allgemeinen zwischen 1 und 30 Gew.%.

Ferner kann die Zugabe eines organischen Lösungsmittels zu dem Öladditiv/Tensidgemisch eine weitere Stelgerung der Wirkung bewirken. Geeignete Lösungsmittel sind beispielsweise Solvesso® (ESSO) oder Aromatic Solvent® (Exxon Corporation) Typen. Die Konzentration derartiger Lösungsmittel kann von 10 bis 80 Gew.% des Gesamtgewichtes betragen.

Derartige Öladditive, die beispielsweise auch in US-A-4,834,908 beschrieben sind, sind für das erfindungsgemäße Mittel besonders bevorzugt. Ein ganz besonders bevorzugtes Öladditiv ist unter dem Namen MERGE® bekannt, kann von der BASF Corporation bezogen werden und ist beispielsweise in US-A-4,834,908 in col. 5, als Example COC-1 im wesentlichen beschrieben. Ein weiteres erfindungsgemäß bevorzugtes Öladditiv ist SCORE® (Novartis Crop Protection Canada.)

Die erfindungsgemäßen Mittel sind für alle in der Landwirtschaft üblichen Applikationsmethoden wie z.B. preemergente Applikation, postemergente Applikation und Saatbeizung geeignet.

Bei der Samenbeizung werden im allgemeinen 0,001 bis 10 g Safener/kg Samen, vorzugsweise 0,05 bis 6 g Safener/kg Samen, appliziert. Wird der Safener in flüssiger Form kurz vor der Aussaat unter Samenquellung appliziert, so werden zweckmäßigerweise Safenerlösungen verwendet, welche den Wirkstoff in einer Konzentration von 1 bis 10000, vorzugsweise von 10 bis 1000 ppm, enthalten.

Zur Applikation werden die erfindungsgemäßen Safener oder Kombinationen von diesen Safenem mit den Herbiziden der Formel I bzw. den Öladditiven zusammen mit den in der Formulierungstechnik üblichen Hilfsmitteln zu Formulierungen verarbeitet, z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten oder Mikrokapseln.

Solche Formulierungen sind beispielsweise in der WO 97/34485 auf den Seiten 9 bis 13 beschrieben. Die Formulierungen werden in bekannter Weise hergestellt, z.B. durch inniges Vermischen und/oder Vermahlen der Wirkstoffe mit flüssigen oder festen Formulierungshilfsmitteln wie z.B. Lösungsmitteln oder festen Trägerstoffen. Femer können zusätzlich oberflächenaktive Verbindungen (Tenside) bei der Herstellung der Formulierungen verwendet werden. Für diesen Zweck geeignete Lösungsmittel und feste Trägerstoffe sind z.B. in der WO 97/34485 auf der Seite 6 angegeben.

Als oberflächenaktive Verbindungen kommen je nach der Art des zu formulierenden Wirkstoffes der Formel 1 nichtionogene, kation- und/oder anionaktive Tenside und Tensidgemische mit guten Emulgier-, Dispergier- und Netzeigenschaften in Betracht. Beispiele für geeignete anionische, nichtionische und kationische Tenside sind beispielsweise in der WO 97/34485 auf den Seiten 7 und 8 aufgezählt. Ferner sind auch die in der Formulierungstechnik gebräuchlichen Tenside, die u.a. in "Mc Cutcheon's Detergents and Emulsifiers Annual" MC Publishing Corp., Ridgewood New Jersey, 1981, Stache, H., "Tensid-Taschenbuch", Carl Hanser Verlag, München/Wien, 1981 und M. und J. Ash, "Encyclopedia of Surfactants", Vol I-III, Chemical Publishing Co., New York, 1980-81 beschrieben sind, zur Herstellung der erfindungsgemäßen herbiziden Mittel geeignet.

Die herbiziden Formulierungen enthalten in der Regel 0,1 bis 99 Gew%, insbesondere 0,1 bis 95 Gew.-% Wirkstoffgemisch aus der Verbindung der Formel I mit den erfindungsgemäßen Safenem, 0,01 bis 2 Gew.% des erfindungsgemäßen Öladditivs, 1 bis 99,9 Gew.% eines festen oder flüssigen Formulierungshilfstoffes und 0 bis 25 Gew.%, insbesondere 0,1 bis 25 Gew.% eines Tensides. Während als Handelsware üblicherweise konzentrierte Mittel bevorzugt werden, verwendet der Endverbraucher in der Regel verdünnte Mittel.

Die Mittel können auch weitere Zusätze wie Stabilisatoren z.B. gegebenenfalls epoxydierte Pflanzenöle (epoxydiertes Kokosnußöl, Rapsöl oder Sojaöl), Entschäumer, z.B. Silikonöl, Konservierungsmittel, Viskositätsregulatoren, Bindemittel, Haftmittel sowie Dünger oder andere Wirkstoffe enthalten. Für die Verwendung von erfindungsgemäßen Safenem oder sie enthaltender Mittel zum Schützen von Kulturpflanzen gegen schädigende Wirkungen von Herbiziden der Formel I kommen verschiedene Methoden und Techniken in Betracht, wie beispielsweise die folgenden:

### i) Samenbeizung

a) Beizung der Samen mit einem als Spritzpulver formulierten Wirkstoff der erfindungsgemäßen Safener durch Schütteln in einem Gefäß bis zur gleichmäßigen Verteilung auf der Samenoberfläche (Trockenbeizung). Man verwendet dabei etwa 1 bis 500 g Wirkstoff der erfindungsgemäßen Safener (4 g bis 2 kg Spritzpulver) pro 100 kg Saatgut.
b) Beizung der Samen mit einem Emulsionskonzentrat der erfindungsgemäßen Safener nach der Methode a) (Naßbeizung).
c) Beizung durch Tauchen des Saatguts in eine Brühe mit 100-1000 ppm erfindungsgemäßer Safener während 1 bis 72 Stunden und gegebenenfalls nachfolgendes Trocknen der Samen (Tauchbeizung).

Die Beizung des Saatguts oder die Behandlung des angekeimten Sämlings sind naturgemäß die bevorzugten Methoden der Applikation, weil die Wirkstoffbehandlung vollständig auf die Zielkultur gerichtet ist. Man verwendet in der Regel 1 bis 1000 g Antidot, vorzugsweise 5 bis 250 g Antidot, pro 100 kg Saatgut, wobei man je nach Methodik, die auch den Zusatz anderer Wirkstoffe oder Mikronährstoffe ermöglicht, von den angegebenen Grenzkonzentrationen nach oben oder unten abweichen kann (Wiederholungsbeize).

### ii) Applikation als Tankmischung

Eine flüssige Aufarbeitung eines Gemisches von Antidot und Herbizid (gegenseitiges Mengenverhältnis zwischen 20:1 und 1:100) wird verwendet, wobei die Aufwandmenge an Herbizid 0,005 bis 5,0 kg pro Hektar beträgt. Das Öladditiv kann in einer Menge von vorzugsweise 0,01 bis 2 Gew. % in die Tankmischung gegeben werden. Solche Tankmischungen werden vor oder nach der Aussaat appliziert.

### iii) Applikation in der Saatfurche

Der Safener wird als Emulsionskonzentrat, Spritzpulver oder als Granulat in die offene besäte Saatfurche eingebracht. Nach dem Decken der Saatfurche wird in üblicher Weise das Herbizid gegenbenenfalls in Kombination mit dem Öladditiv im Vorauflaufverfahren appliziert.

### iv) Kontrollierte Wirkstoffabgabe

Der Safener wird in Lösung auf mineralische Granulatträger oder polymerisierte Granulate (Hamstoff/Formaldehyd) aufgezogen und getrocknet. Gegebenenfalls kann ein Überzug aufgebracht werden (Umhüllungsgranulate), der es erlaubt, den Wirkstoff über einen bestimmten Zeitraum dosiert abzugeben.

Insbesondere setzen sich bevorzugte Formulierungen folgendermaßen zusammen:
(% = Gewichtsprozent; aktives Wirkstoffgemisch bezeichnet die Mischung aus Verbindung der Formel I mit den erfindungsgemäßen Safenem und gegebenenfalls mit den Öladditiven)

| Emulgierbare Konzentrate: | |
|---|---|
| Aktives Wirkstoffgemisch | 1 bis 90 %, vorzugsweise 5 bis 20 % |
| oberflächenaktives Mittel | 1 bis 30 %, vorzugsweise 10 bis 20 % |
| flüssiges Trägermittel | 5 bis 94 %, vorzugsweise 70 bis 85 % |

| Stäube: | |
|---|---|
| Aktives Wirkstoffgemisch | 0,1 bis 10 %, vorzugsweise 0,1 bis 5 % |
| festes Trägermittel | 99,9 bis 90 %, vorzugsweise 99,9 bis 99 % |

| Suspensions-Konzentrate: | |
|---|---|
| Aktives Wirkstoffgemisch | 5 bis 75 %, vorzugsweise 10 bis 50 % |
| Wasser | 94 bis 24 %, vorzugsweise 88 bis 30 % |
| oberflächenaktives Mittel | 1 bis 40 %, vorzugsweise 2 bis 30 % |

| Benetzbare Pulver: | |
|---|---|
| Aktives Wirkstoffgemisch | 0,5 bis 90 %, vorzugsweise 1 bis 80 % |
| oberflächenaktives Mittel | 0,5 bis 20 %, vorzugsweise 1 bis 15 % |
| festes Trägermaterial | 5 bis 95 %, vorzugsweise 15 bis 90 % |

| Granulate: | |
|---|---|
| Aktives Wirkstoffgemisch | 0,1 bis 30 %, vorzugsweise 0,1 bis 15 % |
| festes Trägermittet | 99,5 bis 70 %, vorzugsweise 97 bis 85 % |

Die folgenden Beispiele erläutern die Erfindung weiter, ohne sie zu beschränken.

### Formulierungsbeispiele für Mischungen aus Herbiziden der Formel I, Safener und Öladditiv (% = Gewichtsprozent)

| F1. Emulsionskonzentrate | a) | b) | c) | d) |
|---|---|---|---|---|
| Wirkstoffgemisch | 5% | 10 % | 25 % | 50 % |
| Ca-Dodecylbenzolsulfonat | 6 % | 8 % | 6 % | 8% |
| Ricinusöl-polyglykolether (36 Mol EO) | 4% | - | 4 % | 4 % |
| Octylphenol-polyglykolether (7-8 Mol EO) | - | 4 % | - | 2 % |
| Cyclohexanon | - | - | 10% | 20% |
| Arom. Kohlenwasserstoffgemisch C₉-C₁₂ | 85 % | 78 % | 55 % | 16 % |

Aus solchen Konzentraten können durch Verdünnung mit Wasser Emulsionen jeder gewünschten Konzentration hergestellt werden.

| F2. Lösungen | a) | b) | c) | d) |
|---|---|---|---|---|
| Wirkstoffgemisch | 5 % | 10% | 50% | 90% |
| 1-Methoxy-3-(3-methoxypropoxy)-propan | - | 20% | 20% | - |
| Polyethylenglykol MG 400 | 20% | 10% | - | - |
| N-Methyl-2-pyrrolidon | - | - | 30% | 10% |
| Arom. Kohlenwasserstoffgemisch C₉-C₁₂ | 75 % | 60% | - | - |

Die Lösungen sind zur Anwendung in Form kleinster Tropfen geeignet.

| F3. Spritzpulver | a) | b) | c) | d) |
|---|---|---|---|---|
| Wirkstoffgemisch | 5% | 25% | 50% | 80 % |
| Na-Ligninsulfonat | 4% | - | 3% | - |
| Na-Laurylsulfat | 2 % | 3% | - | 4 % |
| Na-Diisobutyl-naphthalinsulfonat | - | 6 % | 5 % | 6 % |
| Octylphenol-polyglykolether (7-8 Mol EO) | - | 1 % | 2 % | - |
| Hochdisperse Kieselsäure | 1 % | 3% | 5 % | 10 % |
| Kaolin | 88 % | 62 % | 35 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| F4. Umhüllungs-Granulate | a) | b) | c) |
|---|---|---|---|
| Wirkstoffgemisch | 0.1 % | 5 % | 15 % |
| Hochdisperse Kieselsäure | 0.9% | 2 % | 2 % |
| Anorg. Trägermaterial (Æ 0.1 -1 mm) | 99.0 % | 93 % | 83 % |
| Wirkstoffgemisch | 0.1 % | 5 % | 15 % |

wie z.B. CaCO₃ oder SiO₂

Der Wirkstoff wird in Methylenchlorid gelöst, auf den Träger aufgesprüht und das Lösungsmittel anschließend im Vakuum abgedampft.

| F5. Umhüllungs-Granulate | a) | b) | c) |
|---|---|---|---|
| Wirkstoffgemisch | 0.1 % | 5 % | 15 % |
| Polyethylenglykol MG 200 | 1.0 % | 2 % | 3 % |
| Hochdisperse Kieselsäure | 0.9 % | 1 % | 2 % |
| Anorg. Trägermaterial (Æ 0.1 - 1 mm) | 98.0 % | 92 % | 80 % |

wie z.B. CaCO₃ oder SiO₂

Der fein gemahlene Wirkstoff wird in einem Mischer auf das mit Polyethylenglykol
angefeuchtete Trägermaterial gleichmäßig aufgetragen. Auf diese Weise erhält man staubfreie Umhüllungs-Granulate.

| F6. Extruder-Granulate | a) | b) | c) | d) |
|---|---|---|---|---|
| Wirkstoffgemisch | 0.1 % | 3% | 5% | 15 % |
| Na-Ligninsulfonat | 1.5% | 2 % | 3% | 4% |
| Carboxymethylcellulose | 1.4% | 2% | 2% | 2 % |
| Kaolin | 97.0 % | 93% | 90 % | 79 % |

Der Wirkstoff wird mit den Zusatzstoffen vermischt, vermahlen und mit Wasser angefeuchtet. Dieses Gemisch wird extrudiert und anschließend im Luftstrom getrocknet.

| F7, Stäubemittel | a) | b) | c) |
|---|---|---|---|
| Wirkstoffgemisch | 0.1 % | 1 % | 5 % |
| Talkum | 39.9 % | 49 % | 35 % |
| Kaolin | 60.0 % | 50 % | 60 % |

Man erhält anwendungsfertige Stäubemittel, indem der Wirkstoff mit den Trägerstoffen vermischt und auf einer geeigneten Mühle vermahlen wird.

| F8. Suspensions-Konzentrate | a) | b) | c) | d) |
|---|---|---|---|---|
| Wirkstoffgemisch | 3% | 10 % | 25 % | 50 % |
| Ethylenglykol | 5 % | 5% | 5 % | 5% |
| Nonylphenol-polyglykolether (15 Mol EO) | - | 1 % | 2 % | - |
| Na-Ligninsulfonat | 3 % | 3 % | 4 % | 5 % |
| Carboxymethylcellulose | 1 % | 1 % | 1 % | 1 % |
| 37%ige wäßrige Formaldehyd-Lösung | 0.2 % | 0.2 % | 0.2 % | 0.2 % |
| Silikonöl-Emulsion | 0.8 % | 0.8 % | 0.8% | 0.8% |
| Wasser | 87% | 79 % | 62 % | 38 % |

Der feingemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Es ist oft praktischer, den Wirkstoff der Formel I (gegebenenfalls in Kombination mit dem Öladditiv) und den Safener einzeln zu formulieren und sie dann kurz vor dem Ausbringen im Applikator im gewünschten Mischungsverhältnis als "Tankmischung" im Wasser zusammenzubringen. Der Wirkstoff der Formel I und der Safener können auch einzeln formuliert werden und kurz vor dem Ausbringen im Applikator im gewünschten Mischungsverhältnis als "Tankmischung" im Wasser zusammengebracht werden um anschließend das Öladditiv zuzusetzen.

Die herbizid-selektive Wirkung der erfindungsgemäßen Mittel wird in den folgenden Beispielen veranschaulicht.

### Biologische Beispiele

### Beispiel B1: Post-emergenter Versuch:

Die Versuchspflanzen werden unter Gewächshausbedingungen in Töpfen bis zu einem Postapplikationsstadium angezogen. Als Kultursubstrat wird eine Standarderde verwendet. In einem Nachauflausstadium werden die Herbizide sowohl allein als auch in Mischung mit Safenem und/oder Öladditiven auf die Testpflanzen oder auf mit Safenem samengebeizte Kulturpflanzen appliziert. Die Applikation erfolgt als Emulsion (hergestellt aus einem Emulsionskonzentrat (Beispiel F1, c) der Prüfsubstanzen. Die Aufwandmengen richten sich nach den unter Feld- oder Gewächshausbedingungen ermittelten optimalen Dosierungen. Die Auswertung der Versuche erfolgt nach 2 bis 4 Wochen (100% Wirkung = völlig abgestorben; 0% Wirkung = keine phytotoxische Wirkung).

Die Aufwandmenge an Herbizid beträgt jeweils 25 g/ha, die Aufwandmenge an Cloquintocet-mexyl 6,25 g/ha. Als Öladditiv wird MERGE® in einer Konzentration von 1 Gew. % der Spritzbrühe verwendet.

**Tabelle B1.1:**

| Herbizide Wirkung der Verbindungen Nr. 1.007 und 1.008: | | |
|---|---|---|
| Testpflanze | Verbindung Nr. 1.007 | Verbindung Nr. 1.008 |
| Weizen | 0 | 0 |
| Apera | 60 | 25 |
| Alopecurus | 10 | 20 |
| Avena | 10 | 20 |

In diesem Versuch zeigen die Herbizide Nr. 1.007 und 1.008 bei einer Aufwandmenge von 25 g/ha nur schwache bis mittelmäßige herbizide Wirkung auf die Unkräuter. Die Kulturpflanze Weizen wird bei dieser Aufwandmenge nicht geschädigt.

**Tabelle B1.2:**

| Herbizide Wirkung der Verbindungen Nr. 1.007 und 1.008 in Kombination mit dem Safener Cloquintocet-mexyl: | | |
|---|---|---|
| Testpflanze | Verbindung Nr. 1.007 + Cloquintocet-mexyl | Verbindung Nr. 1.008 + Cloquintocet-mexyl |
| Weizen | 0 | 0 |
| Apera | 45 | 25 |
| Alopecurus | 20 | 15 |
| Avena | 20 | 15 |

In diesem Versuch führt die Zugabe von 6,25 g/ha an Cloquintocet-mexyl zu einer Verminderung der herbiziden Aktivität der Verbindung Nr. 1.008 bei allen getesteten Unkräutern, während bei der Verbindung Nr. 1.007 die herbizide Wirkung auf Apera von 60 % auf nur noch 45 % reduziert wird und die herbizide Wirkung auf Alopecurus und Avena von 10 % auf immer noch völlig unbefriedigende 20 % ansteigt. Die Kulturpflanze Weizen wird bei dieser Mischung nicht geschädigt.

**Tabelle B1.3:**

| Herbizide Wirkung der Verbindungen Nr. 1.007 und 1.008 in Kombination mit MERGE®: | | |
|---|---|---|
| Testpflanze | Verbindung Nr. 1.007 + MERGE®: | Verbindung Nr. 1.008 + MERGE®: |
| Weizen | 60 | 50 |
| Apera | 85 | 90 |
| Alopecurus | 90 | 85 |
| Avena | 95 | 95 |

In diesem Versuch zeigen die Verbindungen Nr. 1.007 und 1.008 in Kombination mit MERGE® starke herbizide Wirkung auf alle getesteten Unkräuter. Jedoch wird gleichzeitig eine schwere Schädigung des Weizens beobachtet.

**Tabelle B1.4:**

| Herbizide Wirkung der Verbindungen Nr. 1.007 und 1.008 in Kombination mit Cloquintocet-mexyl und MERGE®: | | |
|---|---|---|
| Testpflanze | Verbindung Nr. 1.007 + Cloquintocet-mexyl + MERGE | Verbindung Nr. 1.008 + Cloquintocet-mexyl + MERGE |
| Weizen | 0 | 0 |
| Apera | 85 | 90 |
| Alopecurus | 90 | 90 |
| Avena | 95 | 90 |

Die Kombination der jeweiligen Herbizide mit Cloquintocet-mexyl und MERGE® führt überraschenderweise zu einer hervorragenden Selektivität der Mischung gegenüber der Kulturpflanze. Während die Unkräuter fast vollständig vernichtet werden, bleibt der Weizen weitestgehend von der phytotoxischen Wirkung der Herbizide verschont.

### Beispiel B2: Postemergenter Versuch (Versuchsbeschreibung wie unter Beispiel B1):

In diesem Versuch wird die herbizide Wirkung der Verbindung Nr. 1.008 in Kombination mit Cloquintocet-mexyl gegenüber der Wirkung der Verbindung Nr. 1.008 in Kombination mit Cloquintocet-mexyl und verschiedenen erfindungsgemäßen Öladditiven verglichen. Die Aufwandmenge an Herbizid beträgt jeweils 8 g/ha, die Aufwandmenge an Cloquintocet-mexyl 2 g/ha. Das Öladditiv wird in einer Konzentration von 0,7 Gew. % der Spritzbrühe verwendet. Die Resultate sind in den folgenden Tabellen angegeben.

**Tabelle B2.1:**

| Herbizide Wirkung der Verbinduna Nr. 1.008 in Kombination mit Cloquintocet-mexyl sowie der Verbindung Nr. 1.008 in Kombination mit Cloquintocet-mexyl und Emery® 2231: | | |
|---|---|---|
| Testpflanze | Verbindung Nr. 1.008 + cloquintocet-mexyl | Verbindung Nr. 1.008 + Cloquintocet-mexyl + Emery®2231 |
| Weizen | 10 | 0 |
| Alopecurus | 0 | 60 |
| Lolium | 0 | 80 |

Die Kombination der Verbindung Nr. 1.008 mit Cloquintocet-mexyl zeigt bei der getesteten Aufwandmenge keine herbizide Wirkung gegen die Unkräuter, jedoch eine phytotoxische Wirkung beim Weizen von 10 %. Wird jedoch diese Mischung mit dem Öladditiv Emery®2231 kombiniert, werden die Unkräuter schwer geschädigt. Überraschenderweise wird die Nutzpflanze vollständig von der phytotoxischen Wirkung des Herbizids verschont (0 % Schädigung). Weitere Beispiele für die überraschende Selektivitäfssteigerung der erfindungsgemäßen Mittel sind in den folgenden Tabellen B2.2 und B2.3 angegeben.

**Tabelle B2.2:**

| Herbizide Wirkung der Verbindung Nr. 1.008 in Kombination mit Cloquintocet-mexyl sowie der Verbindung Nr. 1.008 in Kombination mit Cloquintocet-mexyl und AMIGO®: | | |
|---|---|---|
| Testpflanze | Verbindung Nr. 1.008 + Cloquintocet-mexyl | Verbindung Nr. 1.008 + Cloquintocet-mexyl + AMIGO® |
| Weizen | 10 | 0 |
| Alopecurus | 0 | 50 |
| Lolium | 0 | 90 |

**Tabelle B2.3:**

| Herbizide Wirkuna der Verbindung Nr. 1.008 in Kombination mit Cloquintocet-mexyl sowie der Verbinduna Nr. 1.008 in Kombination mit Cloquintocet-mexyl und Additiv Typ A: | | |
|---|---|---|
| Testpflanze | Verbindung Nr. 1.008 + Cloquintocet-mexyl | Verbindung Nr. 1.008 + Cloquintocet-mexyl + Additiv Typ A |
| Weizen | 10 | 0 |
| Alopecurus | 0 | 30 |
| Lolium | 0 | 60 |

## Patentansprüche

1. Selektiv-herbizides Mittel **dadurch gekennzeichnet, daß** es neben inerten Formulierungshillsmitteln wie Lösüngs mittel oder feste Trägerstoffe als Wirkstoff eine Mischung aus
a) einer herbizid-wirksamen Menge einer Verbindung der Formel 1 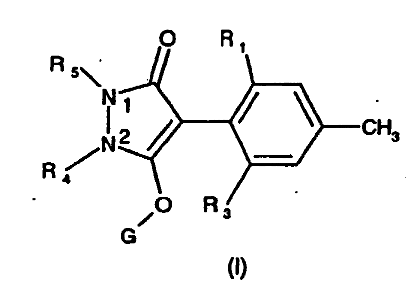 worin
R₁ und R₃ unabhängig voneinander Halogen, Nitro, Cyano, C₁-C₄-Alkyl, C₂-C₄-Alkenyl, C₂-C₄-Alkinyl, C₁-C₄-Halogenalkyl, C₂-C₆-Halogenalkenyl, C₃-C₆-Cycloalkyl, durch Halogen substituiertes C₃-C₆-Cycloalkyl, C₂-C₆-Alkoxyalkyl, C₂-C₆-Alkylthioalkyl, Hydroxy, Mercapto, C₁-C₆-Alkoxy, C₃-C₆-Alkenyloxy, C₃-C₆-Alkinyloxy, Carbonyl, Carboxyl, C₁-C₄-Alkylcarbonyl, C₁-C₄-Hydroxyalkyl, C₁-C₄-Alkoxycarbonyl, C₁-C₄-Alkylthio, C₁-C₄-Alkylsulfinyl, C₁-C₄-Alkylsulfonyl, Amino, C₁-C₄-Alkylamino oder Di-(C₁-C₄-alkyl)-amino bedeuten;.
R₄ und R₅ zusammen eine Gruppe
-C-R₆(R₇)-O-C-R₈(R₉)-C-R₁₀(R₁₁)-C-R₁₂(R₁₃)- (Z₁),
-C-R₁₄(R₁₅)-C-R₁₆(R₁₇)-O-C-R₁₈(R₁₉)-C-R₂₀(R₂₁)- (Z₂),
oder
-C-R₂₂(R₂₃)-C-R₂₄(R₂₅)-C-R₂₆(R₂₇)-O-C-R₂₈(R₂₉)-; (Z₃)
bedeuten;
worin R₆, R₇, R₈, R₉, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆, R₂₇, R₂₈ und R₂₉ unabhängig voneinander für Wasserstoff, Halogen, C₁-C₄-Alkyl oder C₁-C₄-Halogenalkyl stehen, wobei an die Kohlenstoffatome der Gruppen Z₁, Z₂ oder Z₃ ein Alkylenring, welcher zusammen mit den Kohlenstoffatomen der Gruppen Z₁, Z₂ oder Z₃ 2 bis 6 Kohlenstoffatome enthält und durch Sauerstoff untetbrochen sein kann, entweder anelliert oder spiroverknüpft sein kann, oder dieser Alkylenting mindestens ein Ringatom der Gruppen Z₁, Z₂ oder Z₃ überbrückt;
G Wasserstoff, -C(X₁)-R₃₀, -C(X₂)-X₃-R₃₁, -C(X₄)-N(R₃₂)-R₃₃, -SO₂R₃₄, ein Alkali-, Erdalkali-, Sulfonium- oder Ammoniumkation oder -P(X₅)(R₃₅)-R₃₈ oder -CH₂-X₆-R₃₇ bedeutet; X₁, X₂, X₃, X₄ , X₅ und X₆ unabhängig voneinander Sauerstoff oder Schwefel bedeuten;
R₃₀, R₃₁, R₃₂ und R₃₃ unabhängig voneinander Wasserstoff,
C₁-C₁₀-Alkyl, C₁-C₁₀-Halogenalkyl, C₁-C₁₀-Cyanoalkyl, C₁-C₁₀-Nitroalkyl, C₁-C₁₀-Aminoalkyl, C₁-C₅-Alkylamino-C₁-C₅-alkyl, C₂-C₈-Dialkylamino- C₁-C₅-alkyl, C₃-C₇-Cyclalkyl-C₁-C₅-alkyl, C₂-C₁₀-Alkoxy-alkyl, C₄-C₁₀-Alkenyloxy-alkyl, C₄-C₁₀-Alkinyloxy-alkyl, C₂-C₁₀-Alkylthio-alkyl, C₁-C₅-Alkysulfoxyl-C₁-C₅-alkyl, C₁-C₅-Alkylsulfonyl-C₁-C₅-alkyl, C₂-C₈-Alkylideneamino-oxy-C₁-C₅-alkyl, C₁-C₅-Alkylcarbonyl-C₁-C₅-alkyl, C₁-C₅-Alkoxycarbonyl-C₁-C₅-alkyl, C₁-C₅-Aminocarbonyl-C₁-C₅-alkyl, C₂-C₈-Dialkylamino-carbonyl-C₁-C₅-alkyl, C₁-C₅-Alkylcarbonylamino-C₁-C₅-alkyl, C₂-C₅-Alkylcarbonyl-(C₁-C₅-alkyl)-aminoalkyl, C₃-C₆-Trialkylsilyl-C₁-C₅-alkyl, Phenyl-C₁-C₅-alkyl, Heteroaryl-C₁-C₅-alkyl, Phenoxy-C₁-C₅-alkyl, Heteroaryloxy-C₁-C₅-alkyl, C₂-C₅-Alkenyl, C₂-C₅-Halogenalkenyl, C₃-C₈-Cycloalkyl, Phenyl, oder durch C₁-C₃-Alkyl, C₁-C₃-Halogenalkyl, C₁-C₃-Alkoxy, C₁-C₃-Halogenalkoxy, Halogen, Cyano oder Nitro substituiertes Phenyl oder Heteroaryl oder Heteroarylamino, durch C₁-C₃-Alkyl, C₁-C₃-Halogenalkyl, C,-C₃-Alkoxy, C₁-C₃-Halogenalkoxy, Halogen, Cyano oder Nitro substituiertes Heteroarylamino, Diheteroarylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Diheteroarylamino, Phenylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Phenylamino, Diphenylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Diphenylamino, C₃-C₇-Cycloalkylamino, durch C₁-C₃-Alkyl, C₁-C₃-Halogenalkyl, C₁-C₃-Alkoxy, C₁-C₃-Halogenalkoxy, Halogen, Cyano oder Nitrosubstituiertes C₃-C₇-Cycloalkylamino, Di-C₃-C₇-cycloalkylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Di-C₃-C₇cycloalkylamino, C₃-C₇-Cycloalkoxy oder durch C₁-C₃-Alkyl, C₁-C₃-Halogenalkyl, C₁-C₃-Alkoxy, C₁-C₃-Halogenalkoxy, Halogen, Cyano oder Nitro substituiertes C₃-C₇-Cycloalkoxy bedeuten;
R₃₄, R₃₅ und R₃₆ Wasserstoff, C₁-C₁₀-Alkyl, C₁-C₁₀-Halogenalkyl, C₁-C₁₀-Cyanoalkyl, C₁-C₁₀-Nitroalkyl, C₁-C₁₀-Aminoalkyl, C₁-C₅-Alkylamino-C₁-C₅alkyl, C₂-C₈-Dialkylamino-C₁-C₅-alkyl, C₃-C₇-Cyclalkyl-C₁-C₅-alkyl, C₂-C₁₀-Alkoxy-alkyl, C₄-C₁₀-Alkenyloxy-alkyl, C₄-C₁₀-Alkinyloxyalkyl, C₂- C₁₀-Alkylthio-alkyl, C₁-C₅-Alkysulfoxyl- C₁-C₅-alkyl, C₁-C₅-Alkylsulfonyl-C₁-C₅-alkyl, C₂-C₈-Alkylideneamino-oxy-C₁-C₅-alkyl, C₁-C₅-Alkylcarbonyl-C₁-C₅-alkyl, C₁-C₅-Alkoxycarbonyl-C₁-C₅-alkyl, C₁-C₅-Amino-carbonyl-C₁-C₅-alkyl, C₂-C₈-Dialkylamino-carbonyl-C₁-C₅-alkyl, C₁-C₅-Alkylcarbonylamino-C₁-C₅-alkyl, C₂-C₅-Alkylcarbonyl-(C₁-C₅-alkyl)-aminoalkyl, C₃-C₈-Trialkylsilyl-C₁-C₅-alkyl, Phenyl-C₁-C₅-alkyl, Heteroaryl-C₁-C₅-alkyl, Phenoxy-C₁-C₅-alkyl, Heteroaryloxy-C₁-C₅-alkyl, C₂-C₅-Alkenyl, C₂-C₅-Halogenalkenyl, C₃-C₈-Cycloalkyl, Phenyl, oder durch C₁-C₃-Alkyl, C₁-C₃-Halogenalkyl, C₁-C₃-Alkoxy, C₁-C₃-Halogenalkoxy, Halogen, Cyano oder Nitro substituiertes Phenyl oder Heteroaryl oder Heteroarylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Heteroarylamino, Diheteroarylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Diheteroarylamino, Phenylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Phenylamino, Diphenylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Diphenylamino, C₃-C₇-Cycloalkylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes C₃-C₇-Cycloalkylamino, Di-C₃-C₇-cycloalkylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Di-C₃-C₇cycloalkylamino, C₃-C₇-Cycloalkoxy, durch C₁-C₃-Alkyl, C₁-C₃-Halogenalkyl, C₁-C₃-Alkoxy, C₁-C₃-Halogenalkoxy, Halogen, Cyano oder Nitro substituiertes C₃-C₇-Cycloalkoxy, C₁-C₁₀-Alkoxy, C₁-C₁₀-Halogenalkoxy, C₁-C₅-Alkylamino, C₂-C₈-Dialkylamino sowie Benzyloxy oder Phenoxy, wobei die Benzyl- und Phenylgruppen ihrerseits durch C₁-C₃-Alkyl, C₁-C₃-Halogenalkyl, C₁-C₃-Alkoxy, C₁-C₃-Halogenalkoxy, Halogen, Cyano, Formyl, Acetyl, Propionyl, Carboxyl, C₁-C₅-Alkoxycarbonyl, Methylthio, Ethylthio, oder Nitro substituiert sein können, bedeuten; und
R₃₇ C₁-C₁₀-Alkyl, C₁-C₁₀-Halogenalkyl, C₁-C₁₀-Cyanoalkyl, C₁-C₁₀-Nitroalkyl, C₁-C₁₀-Aminoalkyl, C₁-C₅-Alkylamino-C₁-C₅-alkyl, C₂-C₈-Dialkylamino-C₁-C₅-alkyl, C₃-C₇-Cyclalkyl-C₁-C₅-alkyl, C₂-C₁₀-Alkoxy-alkyl, C₄-C₁₀-Alkenyloxy-alkyl, C₄-C₁₀-Alkinyloxy-alkyl, C₂-C₁₀-Alkylthio-alkyl, C₁-C₅-Alkysulfoxyl-C₁-C₅-alkyl, C₁-C₅-Alkylsulfonyl-C₁-C₅-alkyl, C₂-C₈-Alklideneamino-oxy-C₁-C₅-alkyl, C₁-C₅-Alkylcarbonyl-C₁-C₅-alkyl, C₁-C₅-Alkoxycarbonyl-C₁-C₅-alkyl, C₁-C₅-Amino-carbonyl-C₁-C₅-alkyl, C₂-C₈-Dialkylamino-carbonyl-C₁-C₅-alkyl, C₁-C₅-Alkylcarbonylamino-C₁-C₅-alkyl, C₂-C₅-Alkylcarbonyl-(C₁-C₅-alkyl)-aminoalkyl, C₃-C₆-Trialkylsilyl-C₁-C₅-alkyl, Phenyl-C₁-C₅-alkyl, Heteroaryl-C₁-C₅-alkyl, Phenoxy-C₁-C₅-alkyl, Heteroaryloxy-C₁-C₅-alkyl, C₂-C₅-Alkenyl, C₂-C₅-Halogenalkenyl, C₃-C₈-Cycloalkyl, Phenyl, oder durch C₁-C₃-Alkyl, C₁-C₃-Halogenalkyl, C₁-C₃-Alkoxy, C₁-C₃-Halogenalkoxy, Halogen, Cyano oder Nitro substituiertes Phenyl oder Heteroaryl, oder Heteroarylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Heteroarylamino, Diheteroarylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Diheteroarylamino, Phenylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Phenylamino, Diphenylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Diphenylamino, C₃-C₇-Cycloalkylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes C₃-C₇-Cycloalkylamino, Di-C₃-C₇-cycloalkylamino, durch C₁-C₃-Alkyl, C₁-C₃-Halogenalkyl, C₁-C₃-Alkoxy, C₁-C₃-Halogenalkoxy, Halogen, Cyano oder Nitro substituiertes Di-C₃-C₇cycloalkylamino, C₃-C₇-Cycloalkoxy, durch C₁-C₃-Alkyl, C₁-C₃-Halogenalkyl, C₁-C₃-Alkoxy, C₁-C₃-Halogenalkoxy, Halogen, Cyano oder Nitro substituiertes C₃-C₇-Cycloalkoxy oder C₁-C₁₀-Alkylcarbonyl bedeutet; sowie Salze und Diastereomere der Verbindungen der Formel 1, mit der Maßgabe, daß R₁ und R₃ nicht gleichzeitig für Methyl stehen;
b) einer herbizid-antagonistisch wirksamen Menge eines Safeners ausgewählt aus Cloquintocet, einem Alkali-, Erdalkali-, Sulfonium- oder Ammoniumkation des Cloquintocets, Cloquintocet-mexyl, Mefenpyr, einem Alkali-, Erdalkali-, Sulfonium- oder Ammoniumkation des Mefenpyrs und Mefenpyr-diethyl; und
c) einem Additiv enthaltend einen Methylesks einer C₁₂-C₁₈ Fettsaüre aufweist.

2. Verfahren zum selektiven Bekämpfen von Unkräutern und Gräsern in Nutzpflanzenkulturen, **dadurch gekennzeichnet, daß** man die Nutzpflanzen, deren Samen oder Stecklinge oder deren Anbaufläche mit einem Mittel gemäß Anspruch 1 behandelt.

3. Verfahren gemäß Anspruch 2, **dadurch gekennzeichnet, daß** es sich bei den Nutzpflanzenkulturen um Getreide oder Mais handelt.

## Claims

1. A selectively herbicidal composition which, in addition to comprising inert formulation adjuvants such as solvents or solid carriers, comprises as active ingredient a mixture of
a) a herbicidally effective amount of a compound of formula I 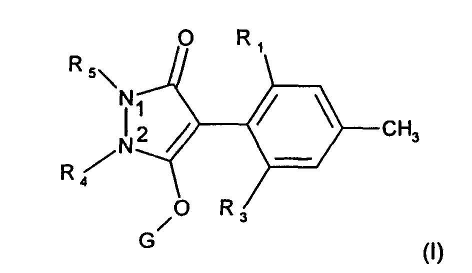 wherein
R₁ and R₃ are, each independently of the other, halogen, nitro, cyano, C₁-C₄alkyl, C₂-C₄-alkenyl, C₂-C₄alkynyl, C₁-C₄haloalkyl, C₂-C₆haloalkenyl, C₃-C₆cycloalkyl, halo-substituted C₃-C₆cycloalkyl, C₂-C₆alkoxyalkyl, C₂-C₆alkylthioalkyl, hydroxy, mercapto, C₁-C₆alkoxy, C₃-C₆alkenyloxy, C₃-C₆alkynyloxy, carbonyl, carboxyl, C₁-C₄alkylcarbonyl, C₁-C₄hydroxyalkyl, C₁-C₄alkoxycarbonyl, C₁-C₄alkylthio, C₁-C₄alkylsulfinyl, C₁-C₄alkylsulfonyl, amino, C₁-C₄alkylamino or di(C₁-C₄alkyl)amino;
R₄ and R₅ together are a group
-C-R₆(R₇)-O-C-R₈(R₉)-C-R₁₀(R₁₁)-C-R₁₂(R₁₃)- (Z₁),
-C-R₁₄(R₁₅)-C-R₁₆(R₁₇)-O-C-R₁₈(R₁₉)-C-R₂₀(R₂₁)- (Z₂),
or
-C-R₂₂(R₂₃)-C-R₂₄(R₂₅)-C-R₂₆(R₂₇)-O-C-R₂₈(R₂₉)- (Z₃),
wherein R₆, R₇, R₈, R₉, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆, R₂₇, R₂₈ and R₂₉ are, each independently of the others, hydrogen, halogen, C₁-C₄-alkyl or C₁-C₄haloalkyl, it being possible for an alkylene ring, which together with the carbon atoms of the groups Z₁, Z₂ or Z₃ contains from 2 to 6 carbon atoms and which may be interrupted by oxygen, to be either fused or spire-bound to the carbon atoms of the groups Z₁, Z₂ or Z₃ or that alkylene ring bridges at least one ring atom of the groups Z₁, Z₂ or Z₃;
G is hydrogen, -C(X₁)-R₃₀, -C(X₂)-X₃-R₃₁, -C(X₄)-N(R₃₂)-R₃₃, -SO₂-R₃₄, an alkali metal, alkaline earth metal, sulfonium or ammonium cation, or -P(X₅)(R₃₅)-R₃₆ or -CH₂-X₆-R₃₇;
X₁, X₂, X₃. X₄, X₅ and X₆ are, each independently of the others, oxygen or sulfur;
R₃₀, R₃₁, R₃₂ and R₃₃ are, each independently of the others, hydrogen, C₁-C₁₀alkyl, C₁-C₁₀-haloalkyl, C₁-C₁₀cyanoalkyl, C₁-C₁₀nitroalkyl, C₁-C₁₀aminoalkyl, C₁-C₅alkylamino-C₁-C₅alkyl, C₂-C₈dialkylamino-C₁-C₅alkyl, C₃-C₇cycloalkyl-C₁-C₅alkyl, C₂-C₁₀alkoxy-alkyl, C₄-C₁₀-alkenyloxy-alkyl, C₄-C₁₀alkynyloxy-alkyl, C₂-C₁₀alkylthio-alkyl, C₁-C₅alkylsulfoxyl-C₁-C₅alkyl, C₁-C₅alkylsulfonyl-C₁-C₅alkyl, C₂-C₈alkylideneamino-oxy-C₁-C₅alkyl, C₁-C₅alkylcarbonyl-C₁-C₅alkyl, C₁-C₅alkoxycarbonyl-C₁-C₅alkyl, C₁-C₅amino-carbonyl-C₁-C₅alkyl, C₂-C₈dialkyl-amino-carbonyl-C₁-C₅alkyl, C₁-C₅alkylcarbonylamino-C₁-C₅alkyl, C₂-C₅alkylcarbonyl-(C₁-C₅alkyl)-aminoalkyl, C₃-C₆trialkylsilyl-C₁-C₅alkyl, phenyl-C₁-C₅alkyl, heteroaryl-C₁-C₅alkyl, phenoxy-C₁-C₅alkyl, heteroaryloxy-C₁-C₅alkyl, C₂-C₅alkenyl, C₂-C₅haloalkenyl, C₃-C₈cyclo-alkyl, phenyl, or C₁-C₃alkyl-, C₁-C₃haloalkyl-, C₁-C₃alkoxy-, C₁-C₃haloalkoxy-, halo-, cyano- or nitro-substituted phenyl or heteroaryl or heteroarylamino, C₁-C₃alkyl-, C₁-C₃haloalkyl-, C₁-C₃alkoxy-, C₁-C₃haloalkoxy-, halo-, cyano- or nitro-substituted heteroarylamino, diheteroarylamino, C₁-C₃alkyl-, C₁-C₃haloalkyl-, C₁-C₃alkoxy-, C₁-C₃haloalkoxy-, halo-, cyano- or nitro-substituted diheteroarylamino, phenylamino, C₁-C₃alkyl-, C₁-C₃haloalkyl-, C₁-C₃alkoxy-, C₁-C₃haloalkoxy-, halo-, cyano- or nitro-substituted phenylamino, diphenylamino, C₁-C₃alkyl-, C₁-C₃haloalkyl-, C₁-C₃alkoxy-, C₁-C₃haloalkoxy-, halo-, cyano- or nitro-substituted diphenylamino, C₃-C₇cycloalkylamino, C₁-C₃alkyl-, C₁-C₃haloalkyl-, C₁-C₃alkoxy-, C₁-C₃haloalkoxy-, halo-, cyano- or nitro-substituted C₃-C₇cycloalkylamino, di-C₃-C₇cycloalkylamino, C₁-C₃alkyl-, C₁-C₃haloalkyl-, C₁-C₃alkoxy-, C₁-C₃haloalkoxy-, halo-, cyano- or nitro-substituted di-C₃-C₇cycloalkylamino, C₃-C₇cycloalkoxy or C₁-C₃alkyl-, C₁-C₃haloalkyl-, C₁-C₃alkoxy-, C₁-C₃haloalkoxy-, halo-, cyano- or nitro-substituted C₃-C₇cycloalkoxy;
R₃₄, R₃₅ and R₃₆ are hydrogen, C₁-C₁₀alkyl, C₁-C₁₀haloalkyl, C₁-C₁₀cyanoalkyl, C₁-C₁₀-nitroalkyl, C₁-C₁₀aminoalkyl, C₁-C₅alkylamino-C₁-C₅alkyl, C₂-C₈dialkylamino-C₁-C₅alkyl, C₃-C₇cycloalkyl-C₁-C₅alkyl, C₂-C₁₀alkoxy-alkyl, C₄-C₁₀alkenyloxy-alkyl, C₄-C₁₀alkynyloxy-alkyl, C₂-C₁₀alkylthio-alkyl, C₁-C₅alkylsulfoxyl-C₁-C₅alkyl, C₁-C₅alkylsulfonyl-C₁-C₅alkyl, C₂-C₈alkylideneamino-oxy-C₁-C₅alkyl, C₁-C₅alkylcarbonyl-C₁-C₅alkyl, C₁-C₅alkoxycarbonyl-C₁-C₅alkyl, C₁-C₅amino-carbonyl-C₁-C₅alkyl, C₂-C₈dialkylamino-carbonyl-C₁-C₅alkyl, C₁-C₅alkylcarbonylamino-C₁-C₅alkyl, C₂-C₅alkylcarbonyl-(C₁-C₅alkyl)-aminoalkyl, C₃-C₆trialkylsilyl-C₁-C₅alkyl, phenyl-C₁-C₅alkyl, heteroaryl-C₁-C₅alkyl, phenoxy-C₁-C₅alkyl, heteroaryloxy-C₁-C₅alkyl, C₂-C₅alkenyl, C₂-C₅haloalkenyl, C₃-C₈cycloalkyl, phenyl, or C₁-C₃alkyl-, C₁-C₃haloalkyl-, C₁-C₃alkoxy-, C₁-C₃haloalkoxy-, halo-, cyano- or nitro-substituted phenyl or heteroaryl or heteroarylamino, C₁-C₃alkyl-, C₁-C₃haloalkyl-, C₁-C₃-alkoxy-, C₁-C₃haloalkoxy-, halo-, cyano- or nitro-substituted heteroarylamino, diheteroarylamino, C₁-C₃alkyl-, C₁-C₃haloalkyl-, C₁-C₃alkoxy-, C₁-C₃haloalkoxy-, halo-, cyano- or nitro-substituted diheteroarylamino, phenylamino, C₁-C₃alkyl-, C₁-C₃haloalkyl-, C₁-C₃alkoxy-, C₁-C₃haloalkoxy-, halo-, cyano- or nitro-substituted phenylamino, diphenylamino, C₁-C₃alkyl-, C₁-C₃haloalkyl-, C₁-C₃alkoxy-, C₁-C₃haloalkoxy-, halo-, cyano- or nitro-substituted diphenylamino, C₃-C₇cycloalkylamino, C₁-C₃alkyl-, C₁-C₃haloalkyl-, C₁-C₃alkoxy-, C₁-C₃haloalkoxy-, halo-, cyano- or nitro-substituted C₃-C₇cycloalkylamino, di-C₃-C₇cycloalkylamino, C₁-C₃alkyl-, C₁-C₃haloalkyl-, C₁-C₃alkoxy-, C₁-C₃haloalkoxy-, halo-, cyano- or nitro-substituted di-C₃-C₇cycloalkylamino, C₃-C₇cycloalkoxy, C₁-C₃alkyl-, C₁-C₃haloalkyl-, C₁-C₃alkoxy-, C₁-C₃haloalkoxy-, halo-, cyano- or nitro-substituted C₃-C₇cycloalkoxy, C₁-C₁₀-alkoxy, C₁-C₁₀haloalkoxy, C₁-C₅alkylamino, C₂-C₈dialkylamino or benzyloxy or phenoxy, it being possible for the benzyl and phenyl groups themselves to be substituted by C₁-C₃alkyl, C₁-C₃haloalkyl, C₁-C₃alkoxy, C₁-C₃haloalkoxy, halogen, cyano, formyl, acetyl, propionyl, carboxyl, C₁-C₅alkoxycarbonyl, methylthio, ethylthio or by nitro; and
R₃₇ is C₁-C₁₀alkyl, C₁-C₁₀haloalkyl, C₁-C₁₀cyanoalkyl, C₁-C₁₀nitroalkyl, C₁-C₁₀aminoalkyl, C₁-C₅alkylamino-C₁-C₅alkyl, C₂-C₈dialkylamino-C₁-C₅alkyl, C₃-C₇cycloalkyl-C₁-C₅alkyl, C₂-C₁₀alkoxy-alkyl, C₄-C₁₀alkenyloxy-alkyl, C₄-C₁₀alkynyloxy-alkyl, C₂-C₁₀alkylthio-alkyl, C₁-C₅alkylsulfoxyl-C₁-C₅alkyl, C₁-C₅alkylsulfonyl-C₁-C₅alkyl, C₂-C₈alkylideneamino-oxy-C₁-C₅alkyl, C₁-C₅alkylcarbonyl-C₁-C₅alkyl, C₁-C₅alkoxycarbonyl-C₁-C₅alkyl, C₁-C₅amino-carbonyl-C₁-C₅alkyl, C₂-C₈dialkylamino-carbonyl-C₁-C₅alkyl, C₁-C₅alkylcarbonylamino-C₁-C₅-alkyl, C₂-C₅alkylcarbonyl-(C₁-C₅alkyl)-aminoalkyl, C₃-C₆trialkylsilyl-C₁-C₅alkyl, phenyl-C₁-C₅-alkyl, heteroaryl-C₁-C₅alkyl, phenoxy-C₁-C₅alkyl, heteroaryloxy-C₁-C₅alkyl, C₂-C₅alkenyl, C₂-C₅haloalkenyl, C₃-C₈cycloalkyl, phenyl, or C₁-C₃alkyl-, C₁-C₃haloalkyl-, C₁-C₃alkoxy-, C₁-C₃haloalkoxy-, halo-, cyano- or nitro-substituted phenyl or heteroaryl, or heteroarylamino, C₁-C₃alkyl-, C₁-C₃haloalkyl-, C₁-C₃alkoxy-, C₁-C₃haloalkoxy-, halo-, cyano- or nitro-substituted heteroarylamino, diheteroarylamino, C₁-C₃alkyl-, C₁-C₃haloalkyl-, C₁-C₃alkoxy-, C₁-C₃haloalkoxy-, halo-, cyano- or nitro-substituted diheteroarylamino, phenylamino, C₁-C₃alkyl-, C₁-C₃haloalkyl-, C₁-C₃alkoxy-, C₁-C₃haloalkoxy-, halo-, cyano- or nitro-substituted phenylamino, diphenylamino, C₁-C₃alkyl-, C₁-C₃haloalkyl-, C₁-C₃alkoxy-, C₁-C₃-haloalkoxy-, halo-, cyano- or nitro-substituted diphenylamino, C₃-C₇cycloalkylamino, C₁-C₃-alkyl-, C₁-C₃haloalkyl-, C₁-C₃alkoxy-, C₁-C₃haloalkoxy-, halo-, cyano- or nitro-substituted C₃-C₇cycloalkylamino, di-C₃-C₇cycloalkylamino, C₁-C₃alkyl-, C₁-C₃haloalkyl-, C₁-C₃alkoxy-, C₁-C₃haloalkoxy-, halo-, cyano- or nitro-substituted di-C₃-C₇cycloalkylamino, C₃-C₇cycloalkoxy, C₁-C₃alkyl-, C₁-C₃haloalkyl-, C₁-C₃alkoxy-, C₁-C₃haloalkoxy-, halo-, cyano- or nitro-substituted C₃-C₇cycloalkoxy or C₁-C₁₀alkylcarbonyl; and salts and diastereoisomers of the compounds of formula I, with the proviso that R₁ and R₃ are not simultaneously methyl;
b) an amount, which is effective for antagonism of the herbicide, of a safener selected from cloquintocet, an alkali metal, alkaline earth metal, sulfonium or ammonium cation of cloquintocet, or cloquintocet-mexyl, mefenpyr, an alkali metal, alkaline earth metal, sulfonium or ammonium cation of mefenpyr, and mefenpyr-diethyl; and
c) an additive comprising a methyl ester of a C₁₂-C₁₈ fatty acid.

2. A method of selectively controlling weeds and grasses in crops of useful plants, which comprises treating the useful plants, their seeds or seedlings or the crop area thereof with a composition according to claim 1.

3. A method according to claim 2, wherein the crops of useful plants are cereals or maize.

## Revendications

1. Herbicide sélectif, **caractérisé en ce qu'**il comprend, hormis des auxiliaires de formulation inertes, tels qu'un solvant ou une substance support solide, à titre d'actif, un mélange de :
a) une quantité efficace au niveau herbicide d'un composé de formule I 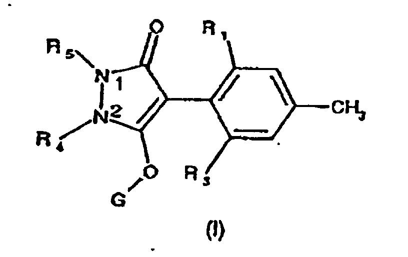 dans laquelle
R₁ et R₃, indépendamment l'un de l'autre, représentent un halogène, nitro, cyano, alkyle en C₁-C₄, alcényle en C₂-C₄, alkinyle en C₂-C₄, halogénoalkyle en C₁-C₄, halogénoalkyle en C₂-C₆, cycloalkyle en C₃-C₆, cycloalkyle en C₃-C₆ substitué par un halogène, alcoxyalkyle en C₂-C₆, alkylthioalkyle en C₂-C₆, hydroxy, mercapto, alcoxy en en C₁-C₆, alcényloxy en C₃-C₆, alkinyloxy en C₃-C₆, carbonyle, carboxyle, alkylcarbonyle en C₁-C₄, hydroxyalkyle en C₁-C₄, alcoxycarbonyle en C₁-C₄, alkylthio en C₁-C₄, alkylsulfinyle en C₁-C₄, , alkylsulfonyle en C₁-C₄, amino, alkylamino en C₁-C₄, ou di(alkyle en C₁-C₄)amino ;
R₄ et R₅, ensemble, représentent un groupe
-C-R₆(R₇)-O-C-R₈(R₉)-C-R₁₀(R₁₁)-C-R₁₂(R₁₃)- (Z₁),
-C-R₁₄(R₁₅)-C-R₁₆(R₁₇)-O-C-R₁₈(R₁₉)-C-R₂₀(R₂₁)- (Z₂),
ou
-C-R₂₂(R₂₃)-C-R₂₄(R₂₅)-C-R₂₆(R₂₇)-O-C-R₂₈(R₂₉)- (Z₃),
dans lesquelles R₆, R₇, R₈, R₉, R₁₀, R₁₁, R₁₂, R₁₃, R₁₄, F₁₅, R₁₆, R₁₇, R₁₈, R₁₉, R₂₀, R₂₁, R₂₂, R₂₃, R₂₄, R₂₅, R₂₆, R₂₇, R₂₈ et R₂₉, indépendamment les uns des autres, représentent l'hydrogène, l'halogène, un alkyle en C₁-C₄ ou halogénoalkyle en C₁-C₄, un cycle alkylène qui comprend, ensemble avec les atomes de carbone des groupes Z₁, Z₂ ou Z₃, 2 à 6 atomes de carbone et peut être interrompu par l'oxygène, peut être soit accolé soit relié de manière spiro aux atomes de carbone des groupes Z₁, Z₂ ou Z_{J}, ou ce cycle alkylène est lié par pontage à au moins un atome du cycle des groupes Z₁, Z₂ ou Z₃ ;
G représente l'hydrogène, -C(X₁)-R₃₀, -C(X₂)-X₃-R₃₁, -C(X₄)-N(R₃₂)-R₃₃, -SO₂-R₃₄, un cation alcalin, alcalino-terreux, sulfonium ou ammonium ou -P(X₅) (R₃₅)-R₃₆ ou -CH₂-X₆-R₃₇ ;
X₁, X₂, X₃, X₄, X₅ et X₆, indépendamment les uns des autres, représentent l'oxygène ou le soufre ;
R₃₀, R₃₁, R₃₂ et R₃₃, indépendamment les uns des autres, représentent l'hydrogène, un alkyle en C₁-C₁₀, halogénoalkyle en C₁-C₁₀, cyanoalkyle en C₁-C₁₀, nitroalkyle en C₁-C₁₀, aminoalkyle en C₁-C₁₀, C₁-C₅-alkylamino-C₁-C₅-alkyle, C₂-C₈-dialkylamino-C₁-C₅-alkyle, C₃-C₇-cycloalkyl-C₁-C₅-alkyle, alcoxyalkyle en C₂-C₁₀, alcényloxyalkyle en C₄-C₁₀, alkinyloxyalkyle en C₄-C₁₀, alkylthioalkyle en C₂-C₁₀, C₁-C₅-alkylsulfoxy-C₁-C₅-alkyle, C₁-C₅-alkylsulfonyl-C₁-C₅-alkyle, C₂-C₈-alkylidèneamino-oxy-C₁-C₅-alkyle, C₁-C₅-alkyl carbonyl-C₁-C₅-alkyle, C₁-C₅-alcoxycarbonyl-C₁-C₅-alkyle, C₁-C₅-aminocarbonyl-C₁-C₅-alkyle, C₁-C₅-dialkyl-aminocarbonyl-C₁-C₅-alkyle, C₁-C₅-alkylcarbonylamino-C₁-C₅-alkyle, C₂-C₅-alkylcarbonyl- (C₁-C₅-alkyll aminoalkyle, C₃-C₆-trialkylsilyl-C₁-C₅-alkyle, phényl-C₁-C₅-alkyle, hétéroaryl-C₁-C₅-alkyle, phénoxy-C₁-C₅-alkyle, hétéroaryloxy-C₁-C₅-alkyle, alcényle en C₂-C₅, halogénoalkyle en C₂-C₅, cycloalkyle en C₃-C₆, phényle ou phényle ou hétéroaryle ou hétéroarylamino substitué par un alkyle en C₁-C₃, halogénoalkyle en C₁-C₃, alcoxy en C₁-C₃, halogénoalcoxy en C₁-C₃, halogène, cyano ou nitro, hétéroarylamino, dihétéroarylamino substitué par un alkyle en C₁-C₃, halogénoalkyle en C₁-C₃, alcoxy en C₁-C₃, halogénoalcoxy en C₁-C₃, halogène, cyano ou nitro, dihétéroarylamino, phénylamino substitué par un alkyle en C₁-C₃, halogénoalkyle en C₁-C₃, alcoxy en C₁-C₃, halogénoalcoxy en C₁-C₃, halogène, cyano ou nitro, phénylamino, diphénylamino substitué par un alkyle en C₁-C₃, halogénoalkyle en C₁-C₃, alcoxy en C₁-C₃, halogénoalcoxy en C₁-C₃, halogène, cyano ou nitro, diphénylamino, cycloalkylamino en C₃-C₇ substitué par un alkyle en C₁-C₃, halogénoalkyle en C₁-C₃, alcoxy en C₁-C₃, halogénoalcoxy en C₁-C₃, halogène, cyano ou nitro, dicycloalkylamino en C₃-C₇, cycloalkylamino en C₃-C₇ substitué par un alkyle en C₁-C₃, halogénoalkyle en C₁-C₃, alcoxy en C₁-C₃, halogénoalcoxy en C₁-C₃, halogène, cyano ou nitro, dicycloalkylamino en C₃-C₇, cycloalcoxy en C₃-C₇ substitué par un alkyle en C₁-C₃, halogénoalkyle en C₁-C₃, alcoxy en C₁-C₃, halogénoalcoxy en C₁-C₃, halogène, cyano ou nitro, cycloalcoxy en C₃-C₇, substitué par un alkyle en C₁-C₃, halogénoalkyle en C₁-C₃, alcoxy en C₁-C₃, halogénoalcoxy en C₁-C₃, halogène, cyano ou nitro,
R₃₁, R₃₅ et R₃₆ représentent l'hydrogène, un alkyle en C₁-C₁₀, halogénoalkyle en C₃-C₁₀, cyanoalkyle en C₁-C₁₀, nitroalkyle en C₁-C₁₀, aminoalkyle en C₁-C₁₀, C₁-C₅-alkylamino-C₁-C₅-alkyle, C₂-C₈-dialkylamino-C₁-C₅-alkyle, C₃-C₇-cycloalkyl-C₁-C₆-alkyle, alcoxyalkyle en C₂-C₁₀, alcényloxyalkyle en C₄*-*C₁₀*,* alkinyloxyalkyle en C₄-C₁₀, alkylthioalkyle en C₂-C₁₀, C₁-C₅-alkylsulfoxy-C₁-C₅-alkyle, C₁-C₅-alkylsulfonyl-C₁-C₅-alkyle, C₂-C₈-alkylidèneamino-oxy-C₁-C₅-alkyle, C₁-C₅-alkylcarbonyl-C₁-C₅-alkyle, C₁-C₅-alcoxycarbonyl-C₁-C₅-alkyle, C₁-C₅-aminocarbonyl-C₁-C₅-alkyle, C₁-C₅-dialkyl-aminocarbonyl-C₁-C₅-alkyle, C₁-C₅-alkylcarbonylamino-C₁-C₅-alkyle, C₂-C₅-alkylcarbonyl-(C₁-C₅-alkyl)aminoalkyle, C₃-C₆-trialkylsilyl-C₁-C₅-alkyle, phényl-C₁-C₅-alkyle, hétéroaryl-C₁-C₅-alkyle, phénoxy-C₁-C₅-alkyle, hétéroaryloxy-C₁-C₅-alkyle, alcényle en C₂-C₅, halogénoalkyle en C₂-C₅, cycloalkyle en C₃-C₈, phényle ou phényle ou hétéroaryle ou hétéroarylamino substitué par un alkyle en C₁-C₃, halogénoalkyle en C₁-C₃, alcoxy en C₁-C₃, halogénoalcoxy en C₁-C₃, halogène, cyano ou nitro, hétéroarylamino, dihétéroarylamino substitué par un alkyle en C₁-C₃, halogénoalkyle en C₁-C₃, alcoxy en C₁-C₃, halogénoalcoxy en C₁-C₃, halogène, cyano ou nitro, dihétéroarylamino, phénylamino substitué par un alkyle en C₁-C₃, halogénoalkyle en C₁-C₃, alcoxy en C₁-C₃, halogénoalcoxy en C₁-C₃, halogène, cyano ou nitro, phénylamino, diphénylamino substitué par un alkyle en C₁-C₃, halogénoalkyle en C₁-C₃, alcoxy en C₁-C₃, halogénoalcoxy en G₁-C₃, halogène, cyano ou nitro, diphénylamino, cycloalkylamino en C₃-C₇ substitué par un alkyle en C₁-C₃, halogénoalkyle en C₁-C₃, alcoxy en C₁-C₃, halogénoalcoxy en C₁-C₃, halogène, cyano ou nitro, dicycloalkylamino en C₃-C₇, cycloalkylamino en C₃-C₇ substitué par un alkyle en C₁-C₃, halogénoalkyle en C₁-C₃, alcoxy en C₁-C₃, halogénoalcoxy en C₁-C₃, halogène, cyano ou nitro, dicycloalkylamino en C₃-C₇, cycloalcoxy en C₃-C₇ substitué par un alkyle en C₁-C₃, halogénoalkyle en C₁-C₃, alcoxy en C₁-C₃, halogénoalcoxy en C₁-C₃, halogène, cyano ou nitro, cycloalcoxy en C₃-C₇, alcoxy en C₁-C₁₀, halogénoalcoxy en C₁-C₁₀, alkylamino en C₁-C₅, dialkylamino en C₂-C₈ substitué par un alkyle en C₁-C₃, halogénoalkyle en C₁-C₃, alcoxy en C₁-C₃, halogénoalcoxy en C₁-C₃, halogène, cyano ou nitro, et benzyloxy ou phénoxy, les groupes phényle et benzyle pouvant pour leur part être substitués par un alkyle en C₁-C₃, halogénoalkyle en C₁-C₃, alcoxy en C₁-C₃, halogénoalcoxy en C₁-C₃, halogène, cyano, formyle, acétyle, propionyle, carboxyle, alcoxycarbonyle en C₁-C₅, méthylthio, éthylthio ou nitro ;
et
R₃₇ représente un alkyle on C₁-C₁₀, halogénoalkyle en C₁-C₁₀, cyanoalkyle en C₁-C₁₀, nitroalkyle en C₁-C₁₀, aminoalkyle en C₁-C₁₀, C₁-C₅-alkylamino-C₁-C₅-alkyle, C₂-C₈-dialkylamino-C₁-C₅-alkyle, C₃-C₇-cycloalkyl-C₁-C₅-alkyle, alcoxyalkyle en C₂-C₁₀, alcényloxyalkyle en C₄-C₁₀, alkinyloxyalkyle en C₄-C₁₀, alkylthioalkyle en C₂-C₁₀, C₁-C₅-alkylsulfoxy-C₁-C₅-alkyle, C₁-C₅-alkylsulfonyl-C₁-C₅-alkyle, C₂-C₈-alkylidèncamino-oxy-C₁-C₅-alkyle, C₁-C₅-alkylcarbonyl-C₁-C₅-alkyle, C₁-C₅-alcoxycarbonyl-C₁-C₅-alkyle, C₁-C₅-aminocarbonyl-C₁-C₅-alkyle, C₁-C₅-dialkyl-aminocarbonyl-C₁-C₅-alkyle, C₁-C₅-alkylcarbonylamino-C₁-C₅-alkyle, C₂-C₅-alkylcarbonyl-(C₁-C₅-alkyl)aminoalkyle, C₃-C₆-trialkylsilyl-C₁-C₅-alkyle, phényl-C₁-C₅-alkyle, hétéroaryl-C₁-C₅-alkyle, phénoxy-C₁-C₅-alkyle, hétéro-aryloxy-C₁-C₅-alkyle, alcényle en C₂-C₅, halogénoalkyle en C₂-C₅, cycloalkyle en C₃-C₈, phényle ou phényle ou hétéroaryle ou hétéroarylamino substitué par un alkyle en C₁-C₃, halogénoalkyle en C₁-C₃, alcoxy en C₁-C₃, halogénoalcoxy en C₁-C₃, halogène, cyano ou nitro, hétéroarylamino, dihétéroarylamino substitué par un alkyle en C₁-C₃, halogénoalkyle en C₁-C₃, alcoxy en C₁-C₃, halogénoalcoxy en C₁-C₃, halogène, cyano ou nitro, dihétéroarylamino, phénylamino substitué par un alkyle en C₁-C₃, halogénoalkyle en C₁-C₃, alcoxy en C₁-C₃, halogénoalcoxy en C₁-C₃, halogène, cyano ou nitro, phénylamino, diphénylamino substitué par un alkyle en C₁-C₃, halogénoalkyle en C₁-C₃, alcoxy en C₁-C₃, halogénoalcoxy en C₁-C₃, halogène, cyano ou nitro, diphénylamino, cycloalkylamino en C₃-C₇ substitué par un alkyle en C₁-C₃, halogénoalkyle en C₁-C₃, alcoxy en C₁-C₃, halogénoalcoxy en C₁-C₃, halogène, cyano ou nitro, dicycloalkylamino en C₃-C₇, cycloalkylamino en C₃-C₇ substitué par un alkyle en C₁-C₃, halogénoalkyle en C₁-C₃, alcoxy en C₁-C₃, halogénoalcoxy en C₁-C₃, halogène, cyano ou nitro, dicycloalkylamino en C₃-C₇, cycloalcoxy en C₃-C₇ substitué par un alkyle en C₁-C₃, halogénoalkyle en C₁-C₃, alcoxy en C₁-C₃, halogénoalcoxy en C₁-C₃, halogène, cyano ou nitro, cycloalcoxy en C₃-C₇ ou alkylcarbonyle en C₁-C₁₀ substitué par un alkyle en C₁-C₃, halogénoalkyle en C₁-C₃, alcoxy en C₁-C₃, halogénoalcoxy en C₁-C₃, halogène, cyano ou nitro ; ainsi que les sels et diastéréomères des composés de formule I, à la condition que R₁ et R₃ ne représentent pas simultanément un groupe méthyle ;
b) une quantité efficace au niveau antagoniste de l'herbicide d'un phytoprotecteur choisi parmi cloquintocet, un cation alcalin, alcalino-terreux, sulfonium ou ammonium du cloquintocet, cloquintocet-mexyl, mefenpyr, un cation alcalin, alcalino-terreux, sulfonium ou ammonium du mefenpyr et le mefenpyr-diéthyle ; et
c) un additif comprenant un ester méthylique d'un acide gras en C₁₂-C₁₈.

2. Procédé de lutte sélective contre les mauvaises herbes dans les cultures de plantes vivrières, **caractérisé en ce que** l'on traite les plantes vivrières, leurs graines ou boutures ou leur zone de culture avec un produit selon la revendication 1.

3. Procédé selon la revendication 2, **caractérisé en ce que** ces cultures de plantes vivrières sont des céréales ou du maïs.
